# EUROPEAN PATENT SPECIFICATION

(11) **EP 3 237 980 B1**
(45) Date of publication and mention of the grant of the patent: **21.04.2021**
(21) Application number: 15817378.1
(22) Date of filing: 23.12.2015
(51) Int. Cl.: G05B 23/02

(54) **DEVICE AND METHOD FOR DISTRIBUTED DIAGNOSTICS ANALYSIS**
VORRICHTUNG UND VERFAHREN ZUR VERTEILTEN DIAGNOSEANALYSE
DISPOSITIF ET PROCÉDÉ D'ANALYSE DE DIAGNOSTIC DISTRIBUÉ

(30) Priority: 23.12.2014 EP 14200158
(43) Date of publication of application: 01.11.2017
(73) Proprietor: Televic Rail NV, 8870 Izegem (BE)
(72) Inventor: EECKHOUT, Carl, 8870 Izegem (BE)
(74) Representative: IPLodge bv
(86) International application number: PCT/EP2015/081119
(87) International publication number: WO 2016/102645

(56) References cited:
- EP-A2- 2 728 429
- WO-A1-2011/042242
- FR-A1- 2 991 066
- US-A1- 2009 094 259
- US-A1- 2010 268 849
- US-A1- 2013 212 420
- US-B1- 8 732 106
- US-B2- 7 117 119

## Description

### Field of the invention

The present invention is generally related to the field of systems capable of real-time analysis of local and distributed diagnostics.

### Background of the invention

In many systems all kinds of diagnostics are provided. At the end, for the user, it is often hard to combine all diagnostics data and to formulate an argued conclusion whether certain system functions are still operational or not, or to which extent the functionality is still operating within known boundaries. Especially in the case of safety systems, it is mandatory to understand, preferably at all times, the reliability of a function.

The state-of-the-art solutions combine diagnostics conclusions in a rather arbitrary way by analysing separate diagnostics events individually or partly combined. For large systems, such method cannot be considered deterministic and provides uncertainties on corner cases or uncovered failure combinations.

Application US2002/138184 discloses an interface for receiving input relating to observed symptoms indicative of one or more failed components, a processing element for correlating the input relating to the observed symptoms with at least one suspect component that is capable of causing the observed symptoms upon failure, and a display for presenting information relating to the suspect components. The system is used to detect the faulty component.

In GB2450241 a method is disclosed to evaluate a condition of a monitored system wherein a plurality of signals are received indicative of observation states of a plurality of operating variables. The monitored system includes an on-board system of an aircraft. A combined probability analysis of the signals is performed using a diagnostic model of the monitored system to provide a health prognosis of the monitored system. The proposed system is not scalable and has no assessment of the functions reliability.

US2002/083372 reveals a diagnostic method for a technical installation for determining a cause of a fault event described by a fault state variable. The method comprises establishing an operating state of the installation defined by state variables, by determining diagnostic parameters each characterizing one of the state variables. A dependency tree containing at least some of the diagnostic parameters is compiled by configuring the dependency tree with hierarchical levels. One important limitation of the method is that the determination tree is maintained static. There is no dynamic assessment of possible state-combinations which have not been foreseen.

In WO2009/148984 a process is proposed for determining the root cause of a fault in a vehicle by using multiple models and observations. Each of the models provides a confidence estimate about the observation it makes regarding a potential fault condition. A hierarchical tree is used to analyse diagnostic codes and other signals from sub-systems and components. Each level of the hierarchical tree accesses the information it has before making a decision. The information from different branches of the tree can be dynamically altered based on vehicle information, such as speed dependency. The model confidence estimates can also be determined using data from multiple vehicles. However, there is no mechanism provided to dynamically assess the effect of different fault finding intervals in the system.

In US7117119 a system for continuous online safety and reliability monitoring is disclosed. Operating information is obtained about at least one of a plurality of instrumented function components, which are part of an instrumented function and a probability of failure on demand is determined for the instrumented function based on the operating information. The operating information includes status information, which may be received from and/or provided to an asset management application configured to maintain status information relating to the various instrumented function components. This asset management application is in communication with an online safety integrity level application configure to receive the status information and calculate a probability of failure on demand or an online mean time to failure (MTTF) for an instrumented function. In further variations, the system allows a user to predict probability of failure on demand values into the future based on hypothetical and/or future planned test times. Hence, the asset management application and the safety integrity level application play a central role in the proposed solution.

Application FR2991066 relates to an information processor system for monitoring a complex system. The information processor system includes a mechanism receiving at least one piece of event detection information associated with a detection time and a mechanism generating at least one remanent confidence level value that decreases over time starting from the detection time. The central component of the system is a module (named *'Modtrans'*) that receives messages as input. It uses a knowledge base of fault flags and a module with magnitude and time axes for generating a raw time-varying fault flag signal, associated with the flag identifier and with the malfunction magnitude valve. Unlike the messages which are received by the module solely when a sensor detects an event, the fault flag signal as generated by the module is a continuous signal, varying as a (decreasing) function of time.

Document US8732106 presents a computer program comprising non-transitory instructions that, based on safety integrity level calculations, e.g. can compare target risk reduction requirements for a facility having a hazard and risk assessment and an associated layer of protective analysis. The document proposes a centralized solution wherein all input data arrives in one place, where subsequently appropriate instructions are determined and sent based on analysis of the received information.

The centralised approach as described e.g. in the above-described prior art documents is limited that there are no means provided to perform a continuous local and distributed assessment on the health state of the envisaged function. As such the presented prior art does not cope with local embedded decision nodes, spread over the entire architecture of the envisaged systems, taking local decisions based on local and/or propagated reliability data extracted from the system. This means that these systems are not capable of automatically taking e.g. safety related actions to stop certain functions in one part of the system while still maintaining functions in this part or other parts of the system. The prior art approaches also rely on human interventions to make the system health assessment and intervene if needed.

Hence, there is a need for a solution which allows for processing diagnostic information on the various functions performed by a component of a system, so that it is not needed anymore to switch off the full system as soon as a failure is detected in, for example, one system component.

### Summary of the invention

It is an object of embodiments of the present invention to provide for a device and method to perform diagnostics based on the real-time reliability investigation of system components and sub-components of a system in a distributed way in order to come to operational conclusions for one or more functions provided by the system.

The above objective is accomplished by the solution according to the present invention.

In a first aspect the invention relates to a system according to claim 1. Each component of the plurality of system components of the claimed system comprises a device for determining a reliability measure for a given function established by one or more functional blocks of a system component to be assessed. The device comprises
- input means for receiving, for each functional block involved in establishing said given function, information from one or more diagnostic blocks each representing a condition of a functional block of a system component to be assessed, said functional block being involved in establishing a given function,
- one or more modules arranged for classifying said conditions, for deriving diagnostic test interval information and for determining a functional block reliability estimation for each of the functional blocks based on the diagnostic test interval information and/or on the classified conditions,
- calculation means adapted for determining a reliability measure for that given function established by the one or more functional blocks based on the one or more functional block reliability estimations,
- decision means for deriving a decision from the reliability measures of the given function,
- output means for outputting the decision in a format adapted for a physical interface of said system component.

The proposed solution indeed allows for the real time evaluation of correct performance of functions related to a system component and to assess independently whether a function is impacted or not by a malfunction of a certain functional block, covered by diagnostics. More in particular, the invention discloses a real time, time dependent allocation of a reliability estimation of a function related to a system component. Clearly, when a functional block within a component was just diagnosed to operate correctly, it is very likely this functional block still operates correctly a short time afterwards. However, when diagnostics are not performed for a long time, the probability to ensure the functional block is still operational, can be very low. This aspect has been taken into account in the current invention where different ways to allocate a reliability estimate to a functional block are presented. As such an analysis is carried out for all the functional blocks, spread over the system, establishing the function, so that a reliability measure can be determined for the function being considered, based on a reliability estimation of all functional blocks involved in realizing that function. The reliability estimation of the one or more functional blocks is assessed and a decision is derived. In the output means the decision is brought in a suitable format to be accepted by the system component in question. The proposed approach allows determining the reliability on a function-by-function basis. If there is an issue with a system component but that issue does not affect reliable operation of a certain function, this is reflected in the reliability measure for that function still being high, while another function which effectively experiences a negative consequence of the issue with that component will yield a, possibly severely, decreased reliability measure that may e.g. trigger an alarm in anywhere in the system where the required reliability information is available. For one function the decision can be executed in another component in the system than for another function which has acting elements on other components in the system. The decisions can be executed locally without centralised units being involved.

In an embodiment of the invention the module comprises for classifying said conditions one or more first classifiers operative based on a threshold level.

In one embodiment the module comprises an internal clock for performing timestamping. In another embodiment the module is arranged for receiving an external clock signal for performing timestamping.

Advantageously, the module comprises an interval counter arranged for being reset after a diagnostic test.

In a preferred embodiment the device is devised with discrete hardware components. The invention also relates to a Field Programmable Gate Array (FPGA) or an application specific integrated circuit (ASIC) wherein the device is implemented.

In another embodiment the module is arranged for generating a timestamp based on a level transition, on a rising or falling edge, on specific protocol conventions or on the signal edges.

In a preferred embodiment the device comprises an output condition assessor arranged for evaluating the reliability measure. The output condition assessor advantageously comprises at least one second classifier for performing that evaluation.

In another embodiment the device comprises an internal diagnostics infrastructure for monitoring internal processes in the device. The reliability estimator preferably provides in internal as well as external interfaces to communicate its conclusions and real time reliability estimates for further processing in the system.

In yet another embodiment the device comprises a configuration infrastructure block for setting parameters of the input means and/or the module. The reliability estimator is then capable of performing a configuration which allows programming the selection of input and output, the different reliability models to instantiate with their related parameters and the way to combine the functional block reliabilities into the function related reliabilities. This interface also allows storing the reliability estimator parameters in order to retrieve this data after a power cycle allowing for correct timekeeping.

According to the invention, the device comprises an output interface for propagating said reliability measure. In a system comprising multiple system components, the reliability estimators are capable of communicating their findings to each other allowing for the reliability information concerning a system function to propagate through the entire system. Based on this propagated data, the relevant system component, acting as a decision node for a certain function, will be capable of enabling or disabling system functions based on diagnostics relevant for the specific function.

In another aspect the invention relates to a method for determining a reliability measure for a given function established by one or more functional blocks of a system component to be assessed, according to claim 11. :

The invention also relates to a program, according to claim 12.

Also disclosed is an exemplary unclaimed method for upgrading a system comprising a plurality of system components, each of the system components comprising one or more functional blocks for performing one or more functions. The method comprises
- providing a device as previously described,
- defining for each functional block involved in establishing a given function, one or more conditions of the respective functional block of a system component of said plurality to be assessed,
- executing the steps of the method as described, using one or more pieces of information each representing one of said conditions,
- upgrading said system component to be assessed according to the decision.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, wherein like reference numerals refer to like elements in the various figures.

Fig.1 illustrates the relation between a system architecture and system functions.

Fig.2 illustrates a system as considered in the invention, comprising a plurality of components.

Fig.3 illustrates an exemplary component of the system of Fig.1

Fig.4 illustrates a detailed decomposition of a reliability estimator.

Fig.5 illustrates a decomposition of an input condition assessor.

Fig.6 illustrates a decomposition of a fault finding interval processor.

Fig.7 illustrates the effect of fault finding interval timing.

Fig.8 illustrates a decomposition of a reliability allocator.

Fig.9 illustrates the combination of the instantaneous reliability estimations from several reliability allocators in a function reliability calculator.

Fig.10 illustrates an output condition assessor.

Fig.11 illustrates a physical output interface.

Fig.12 illustrates an example embodiment of a hierarchical system topology.

Fig.13 illustrates the fault tree functions associated with the functions of the system of Fig.10.

Fig.14 illustrates the reliability estimation evolution for system components of Fig.12.

Fig.15 illustrates the total and intermediate reliability estimation for the excessive shock detection function.

Fig.16 illustrates a reliability figure evolution when accelerometer X1 in Sensor 1 fails.

Fig.17 illustrates the impact of X1 failure on the reliability function output of S1.

Fig.18 illustrates the reliability figure evolution if the shock detector in Fig.12 fails.

Fig.19 illustrates the reliability figure evolution in case CAN bus 2 in Fig.12 fails.

Fig.20 illustrates the reliability level of the excessive shock detection function.

Fig.21 illustrates a reduction of the reliability level of the instability detection function.

Fig.22 illustrates the reliability figure evolution in case the control panel in Fig.12 fails.

Fig.23 illustrates the loss of reliability level for the derailment detection function.

Fig.24 illustrates the reliability figure evolution if X1 and Z2 in Fig.12 fail.

Fig.25 illustrates the failure on X1 not having effect on the excessive shock functionality, but the failure of Z2 causes the function not to be reliable anymore.

Fig.26 illustrates the influence on the reliability of the instability detection function in case X1 fails.

Fig.27 illustrates the reliability figure evolution in case of an increased fault finding interval on sensing element Z1 in Fig.12.

Fig.28 illustrates the corresponding excessive shock detection reliability.

Fig.29 illustrates a case where the sensing element Z1 and the shock detector fail.

Fig.30 illustrates a drop in reliability of the excessive shock function.

### Detailed description of illustrative embodiments

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

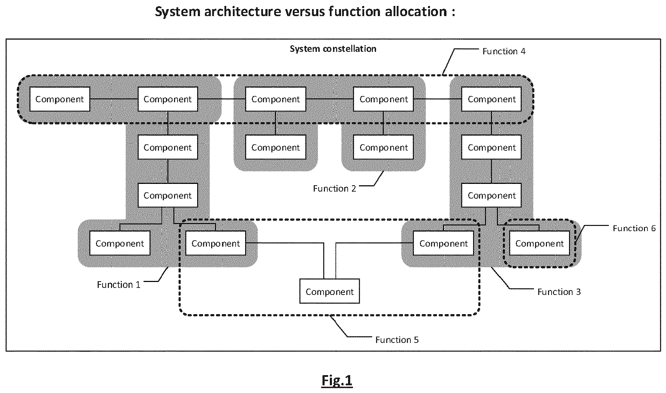

Fig.1 shows a system configuration comprising a variety of components. The considered system performs a plurality of functions. Dependent on the function, one or more components shown in the figure are involved in establishing said function. Depending on the function, a component can act as a decision taking node for that particular function or just forms a part of the data stream path for that function where some processing is performed on an incoming signal and an output signal is next forwarded. A component can also act as a decision taking node for one function while for another function it is just a part of the data stream path.

A failure of one of the system components can possibly impact the functional behaviour of one or more functions. By organising the diagnostics performed on the components so that diagnostic 'events' (i.e. diagnostic tests) are translated into a measure for the reliability of the component and by assessing the total targeted reliability figure of an individual function, it can be determined, based on the reliabilities of the different composing components of the function, whether the function still fulfils the criteria to ensure correct operational performance.

The present invention discloses a solution for real-time analysis of local and distributed diagnostics that facilitates decisions on functions provided by the system wherein the solution is implemented. The invention exploits a scalable concept of real-time reliability estimation of system components and functions and propagation of reliability information concerning specific functions through a system built up with a plurality of components. More in particular, the invention describes a scalable, distributed standardized way to determine and communicate the real-time operational reliability of at least relevant parts of a component or a system comprising that component in order to support local or centralised accurate diagnostics conclusion and decision making, taking on-line and-offline testing into account.

The proposed approach can be realized in a pure software implementation, but it can also be organized in the form of hardware. Embodiments of the system of the invention comprise implementations in hardware circuits, in silicon chip devices, but also purely in software running on the system component controller or on one or more programmable devices.

In the invention systems are considered comprising a plurality of components ordered in a topology comprising a number of hierarchical levels, a mesh topology or any other kind of topology. Each component is designed to perform one or more tasks in or for the system. Each task supports one or more functions to be performed by the system or at least a part thereof. One or more system components are adapted for performing internal diagnostics to evaluate to which extent the composing parts of the system component in question operate correctly. The invention proposes adding reliability estimation at the system component level and in most cases (but not necessarily always) propagating to other components information resulting from an analysis based on the reliability estimation for said system component or for at least a part of a function.

In the invention a system is considered comprising components wherein diagnostic data are exploited to assess the reliability of certain functions related to test time intervals. A reliability figure or a weight factor is allocated to specific component functions. This reliability information can be propagated to other system components (possibly at another hierarchical level if the system is hierarchical) for inclusion in further function reliability estimations. Based on the reliability figures, the condition of functions (i.e. whether they still are operating in a reliable way or not) can be assessed in an unambiguous way by components of the system. This allows continuing the use of certain system functionalities even though diagnostic errors were reported, while other functions are being disabled.

The proposed solution provides for a real time assessment of the state of a system function based on reliability estimates of system components functional blocks. In case of a failure of specific functional blocks in a system, it can unambiguously be determined which system functions can still operate reliably. As a consequence of the proposed approach, system functions which are not impacted by the failure will still remain in operation as such, yielding a general system availability improvement.

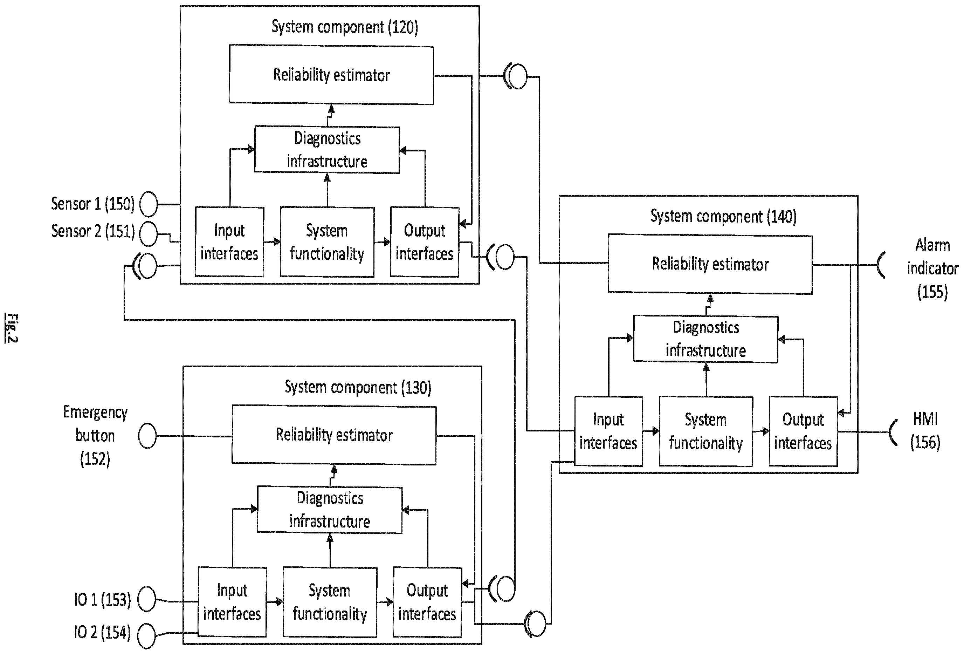

Fig.2 provides a scheme of a typical system considered in the present invention. Two system components 120 and 130 are shown, which at their respective inputs interfaces receive a number of input signals. System component 130 is fed with inputs from IO1 and IO2. System component 120 receives inputs from Sensor1 and Sensor2 and also receives a signal output by component 130. In each system component the basic building blocks are indicated. The one or more inputs applied to the input interfaces are needed for performing a certain system functionality the component is designed for. Resulting signals to be output by the component are applied to one or more output interfaces that take care of further propagation of one or more output signals to other components in the system. The diagnostic infrastructure block in Fig.2 can receive information from the input and output interfaces and from the execution or non-execution of a function for which the system component is responsible for. The diagnostic infrastructure block represents the monitoring and diagnostic means provided in the system component in order to validate the associated functional block(s) in the system component. The diagnostic infrastructure provides input for the reliability estimator (106), which can also receive external input via an interface. In component 130 the reliability estimator receives a signal from an emergency button. The reliability estimator processes the data it receives at its input. The conclusions can be distributed directly to an external output and/or linked to component output interfaces. As can be seen from Fig.2, the reliability estimator of component 140 receives input from another reliability estimator. This component 140 is a system component that receives inputs from both components 120 and 130. Component 140 has a same basic structure as the other two components shown in Fig.2.

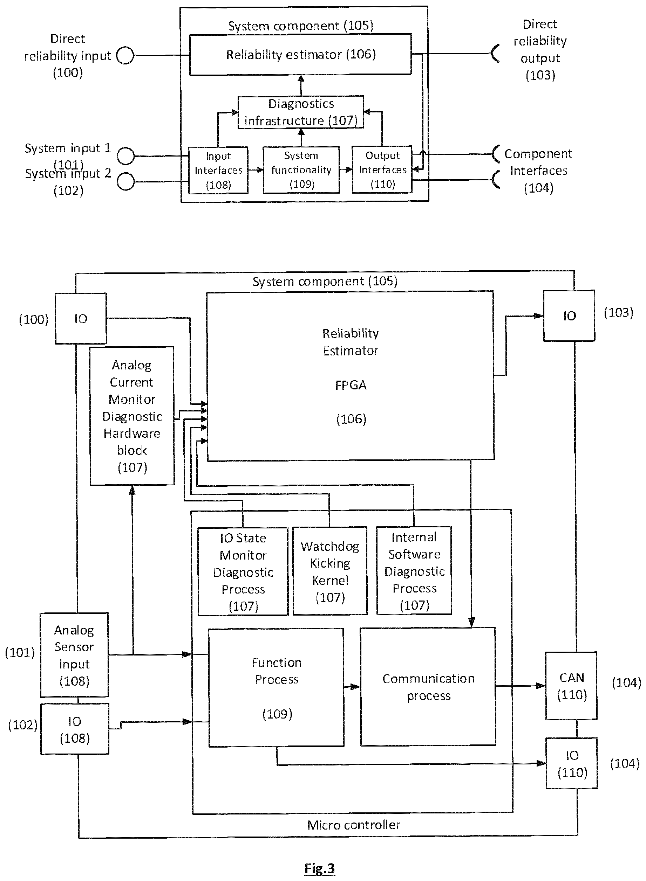

Fig.3 illustrates an example of a practical implementation of a system component 105. The basic system component scheme is repeated at the top of the figure so that the various parts in the implementation in the bottom part can easily be recognised. The bottom part of Fig.3 represents a system component which allows an analog sensor signal at its input whereon hardware (107) is implemented to evaluate whether the sensor current fits specific requirements, for instance, if the signal lies between 4mA and 20mA. The analog current monitor diagnostic hardware block (107) is a diagnostic block which reports to the reliability estimator. A diagnostic block is to be construed as a set of signals required for assessing the proper operation of a certain function of the system component. If the current value does not fall within the specified range, the reliability estimator assigns a low reliability to the functional block related to the analog sensor signal.

The system component is also provided with two digital inputs 100 and 102. The analog input 101 and the digital input 102 are used to perform the function and communicate by the microcontroller to the CAN interfaces. Additionally, a digital output 104 is manipulated in function of the functional process. The microcontroller itself is also provided with diagnostic infrastructure (107) like an I/O state monitor, a watchdog kicking kernel and an internal software diagnostics process. These facilities are capable of detecting specific microcontroller related issues like I/O-core issues, endless loops, memory violations, .... Transitions in the diagnostic information are reported to the reliability estimator and provided with a reliability figure.

In the reliability estimator, here implemented in a FPGA, the reliability allocations to the different functional blocks are combined into a function reliability estimation. As an example, the function can be based on the fact that the reliability of the analog signal and the kernel needs to exceed a certain threshold to allow CAN communication. The reliability of both input I/Os must be high and there may not be an internal error to allow de-assertion of the digital output. The reliability estimator then evaluates whether these criteria are met as a function of the time elapsed after the latest diagnostic event for each function and taking the diagnostics state into account for each of the functions. If not, an indication is launched to stop the CAN communication and/or de-assert the digital output, respectively. It will also automatically de-assert its own specific digital output.

Each system component comprises a reliability estimator to determine reliability figures in view of diagnostic input from its own diagnostic infrastructure 107 (e.g. test circuits, watchdog circuits, ...) as well as from diagnostic facilities elsewhere in the system (i.e. from other reliability estimators). Diagnostic input can also be provided by specific interfaces on the system component directly feeding reliability data to the reliability estimator. This sets up a transparent channel towards the function reliability calculator. Processing means are available in the system component to process locally the input interfaces. The system component further comprises a reliability estimator to locally take decisions on the reliability of a function of the component and is arranged to generate outputs to other system components based on local knowledge and the decision. In most embodiments there is indeed propagation of information on reliability estimates of one or more functions supported by the relevant system components.

In the next paragraphs the various building blocks of a system component are described with more detail.

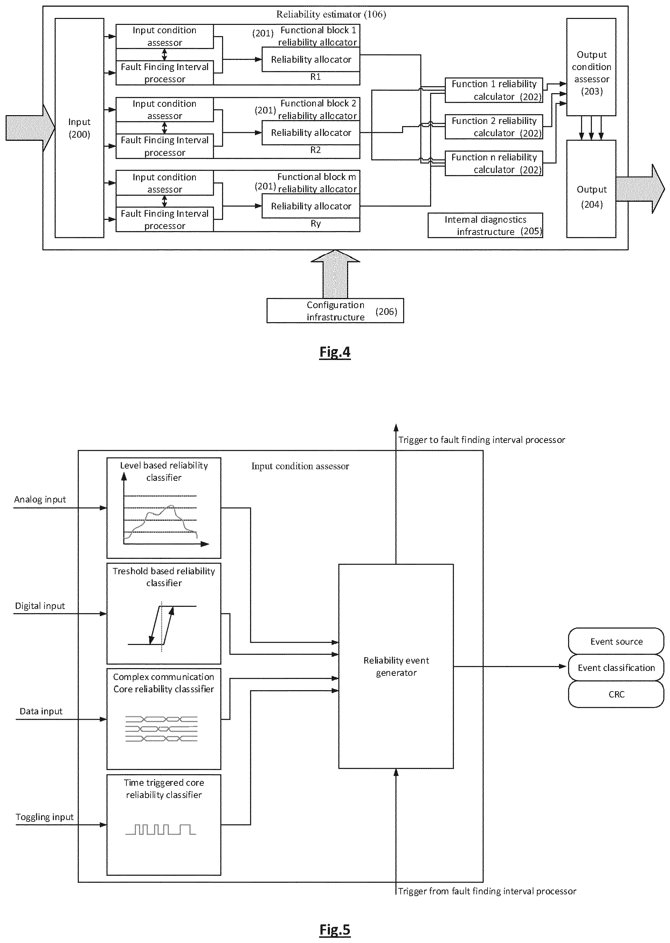

A detailed scheme of a reliability estimator block (106), being part of a system component or implemented as a stand-alone device arranged for communicating with the system component, is shown in Fig.4. The main task of the reliability estimator is to translate diagnostic information from the system component into an estimated reliability figure of the one or more functional blocks in this component. By combining the reliability figures of the relevant composing blocks into a real time reliability figure for a function of the system component, an evaluation of its correct functional behaviour is performed for that function. By combining the reliability figures of the relevant composing blocks differently, a reliability estimate can possibly be made for another function of this system component. A reliability estimator comprises a suitable input block for accepting different physical inputs. The physical interface at the input can so be adapted to the requirements of the reliability estimator. Diagnostic hardware can occur in various types and needs to be adapted for communication with the input condition assessor (see below). In some cases this can be implemented with discrete hardware components. In other cases it can be part of an ASIC, FPGA or System on Chip.

The input block allows routing the input triggers related to a certain diagnostic block to an input condition assessor and fault finding interval processor. As already mentioned, a diagnostic block is to be construed as a set of signals required for assessing the proper operation of a certain function of the system component. As can be seen from Fig.4, the estimator may comprise a plurality of functional block reliability allocators, each linked to a different diagnostic block. Each functional block reliability allocator comprises an input condition assessor and a fault finding interval processor, the outputs of which are applied to the reliability allocator block. The latter block computes and outputs an instantaneous reliability estimation for each functional block provided with diagnostics and involved in realising that certain function. Reliability estimations output by the reliability allocator blocks of various functional block reliability allocator are combined in a reliability calculator for various system functions. The calculated reliability measures are fed to an output condition assessor, which leads the reliability information to an output block.

The different input signals related to a specific diagnostic block of the component or related to another reliability estimator or direct reliability estimator input are routed to the input condition assessor and fault finding interval processor for that diagnostic block. In case there are multiple diagnostics blocks each covering a section of the system component, there may be a plurality of functional block reliability allocators, one for every diagnostic block, each containing an input condition assessor and a fault finding interval processor, as illustrated in Fig.3. The fault finding interval processor blocks timestamp the diagnostic events and further provide as output a signal indicating that a test was done for the diagnostic block linked to it. The output signal can possibly also serve to classify the reliability of the diagnostic block in the reliability allocator. In parallel the fault finding interval processor triggers the input condition assessor to evaluate the result of the diagnostic event.

Fig.5 shows the decomposition of an input condition assessor block in a number of possible configurations. Different types of input information can be applied to the reliability estimator : analog, digital or a complex combination of diagnostics coupled interfaces. The input can also be coupled to an interface external to the system component and allowing for adequate reliability data propagation through the system. Different types of input signals are handled by specific reliability classifiers in the input condition assessor block. Based on the signals coming from the various reliability classifiers a reliability event generator derives a timestamped and classified reliability event for further processing. The reliability event is the result of the classification of the diagnostics information processed by the reliability classifier. The reliability event generator block is arranged for exchanging trigger signals with the fault finding interval generator. The event source can be related to, e.g., a trespassing of an analog input signal level being a diagnostic indication that reliability has dropped of the connected functional block. Another event source can be the reception of a message, coming from internal or external diagnostic infrastructure or from reliability estimators, indicating that the reliability of a certain connected functional block has changed. This is reported to the reliability allocator over internal interfaces to which internal diagnostics can be provided, for instance by adding cyclic redundancy check information during data interchange.

A signal originating from a diagnostics block and entering an input condition assessor can be analog. In such case the analog signal is allocated to a level based reliability classifier. This classifier labels the actual signal with a reliability class. In case a specific threshold level is exceeded, a trigger is launched to the fault finding interval processor in order to timestamp this event and to reset the fault finding interval. At the same time the event is reported to the reliability allocator by the reliability event generator. In case the input coming from the diagnostics block is a digital signal, a threshold based reliability classifier in the input condition assessor triggers the reliability event generator to generate a classification event and triggers the fault finding interval processor again to generate a timestamp event. A convention can be that a high input signal corresponds to a successful diagnostic test. If the input signal goes low, a failure was detected. Associated reliabilities can be determined for both cases. In case the data input is used, a more complex mechanism is provided to communicate the findings of the diagnostic infrastructure or lower level system components. Such input can be for instance SPI, I2C, parallel bus, ... The complex communication core reliability classifier drives the reliability event generator to generate the event classification and associated timestamp. The diagnostics infrastructure can also generate a toggling input, like a time windowed watchdog. Depending on the implemented logic a reliability event can be generated based on pulse shapes. This example illustrates that the invention can also be used as advanced watchdog system capable of driving a system reset for instance. In some cases the architecture can clearly be optimised by combining the input condition assessor and fault finding interval processor in one functional block within the reliability estimator.

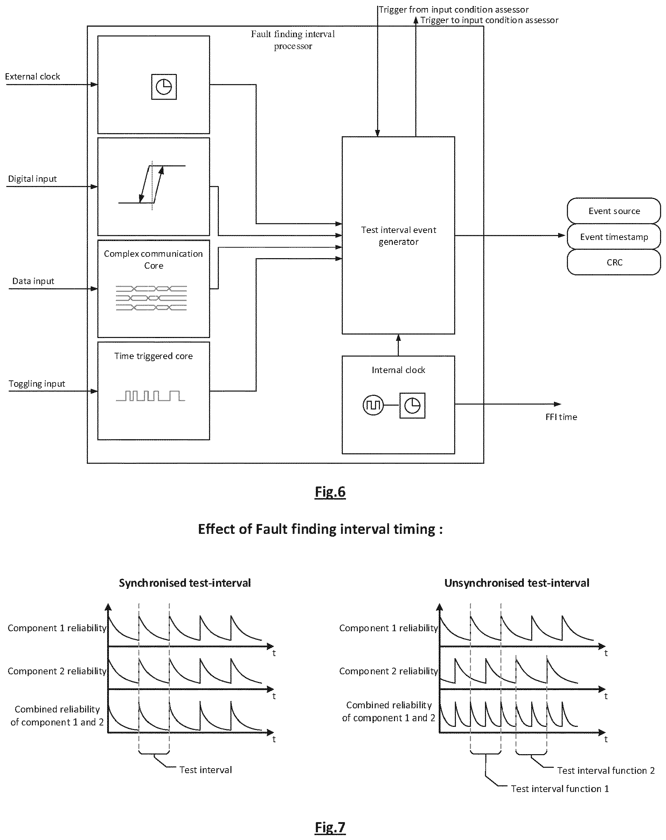

Fig.6 illustrates an embodiment of a decomposed fault finding interval processor. It accepts different types of input signals (data input, toggling input, external clock signal, ...), which can possibly be shared with the input condition assessor. A test interval event generator uses the various inputs as a basis for timestamped event handling. The diagnostic events are linked to a timestamp in order to control the fault finding interval or to provide the necessary time data to the reliability allocator(s) of the reliability estimator(s) for use further in the process. A fault finding interval is to be construed as the time elapsed between two diagnostic tests of a certain functional block. Time allocation can be organized based on an internal or on an external clock. Hence, the input condition assessor evaluates the results of the diagnostic data and reports to the reliability allocator if there was a certain event that impacts the reliability of a functional block not based on the evolution of time, i.e. based on a malfunction that has occurred.

As illustrated in Fig.6, the fault finding interval control mechanism can be adapted with respect to timing source as well as interval reset source. Timing can be generated internally in the reliability estimator but can also be applied from an external interface. A diagnostic event concerning a certain functional block acts as a fault finding interval timer reset.

A fault finding interval processor handles the time related information of the diagnostic events related to a certain functional block. This means that in case a diagnostic action was performed (i.e. a diagnostic test was started), the fault finding interval counter will be reset. From then onwards, time data is tracked and reported towards the reliability allocator to be used in the respective reliability models. As shown in Fig.7 the instant of reliability assessment is important in order to come to a correct assessment of the function reliability, since it can clearly be seen that, depending on the diagnostics scheduling, the function reliability evolution can behave quite differently.

The fault finding interval processor is also capable of extracting diagnostic data from time based diagnostics. One example of this case is an implementation of a watchdog signal decoder for which an instance of the time triggered core reliability classifier can be used.

The fault finding interval processor operates in close cooperation with the input condition assessor and can make use of the same input signal(s). The interval processor analyses the timing aspects from the diagnostics infrastructure or down-level system components and marks the associated events with timestamps. In case of analog input signals, the timestamp event is based on a level transition. For digital inputs, the event is generated on a rising or falling edge. For data input, the event is generated based on specific protocol conventions and for the toggling input also the edges of the signal is used.

The interval processor specifically keeps track of the time when a diagnostic test was performed. The fault finding interval processor has also internal and/or external clock facilities available to allow the generation of a sufficiently accurate timestamp for the events and time counting facilities to keep track of the elapsed time since the last diagnostic test was executed.

The timestamp event, indicating when a test was executed for a specific diagnostic block, and the event classification, indicating whether a test was failing, successful or classifies to a certain class, are routed to a reliability allocator which defines the actual reliability estimate for the functional block covered by the diagnostics infrastructure.

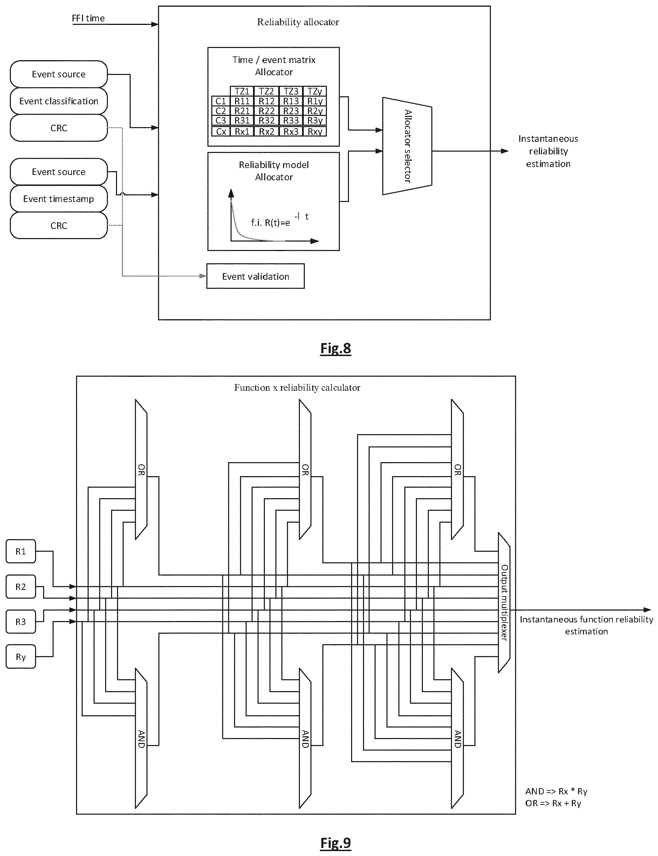

A more detailed scheme of a reliability allocator is shown in Fig.8. The allocator processes the classified diagnostic events in function of their timestamp to obtain an instantaneous reliability estimation for the part related to the diagnostics input. Several methods are available in the art to allocate an instantaneous reliability figure. A number of options are illustrated in Fig.8. A matrix allocator can for instance assign an instantaneous reliability figure based on the time since the last test or diagnostic event and based on the event classification. Another option is a mathematical reliability model which makes use of the time since the last diagnostics event and a defined reliability coefficient. Of course other models can be applied as well.

In a simple form a time/event matrix allocator is used to define a reliability figure as a function of a time zone related to the fault finding interval (FFI) time and the event classification. By populating a table with reliabilities, a specific allocation can be organized depending on the event classification and the time that has elapsed since last testing. In another form a mathematical model is used to define the reliability based on the FFI time of the event. Depending on the classification more complex scenarios can be modelled. Examples of mathematical reliability functions are widely available.

The instantaneous reliability figure of the functional blocks covered by the different diagnostic infrastructure inputs can then be combined into a function reliability calculator (see Fig.4) which makes use of standard fault tree calculation techniques. For each function of a system component such reliability calculator can be provided. This means that a specific instantaneous reliability figure of a part of the system component is available for reuse in other function reliability estimations.

In Fig.9 the outputs of various reliability allocators are combined in a function reliability calculator. This block performs a mathematical fault tree analysis function based on a defined configuration resulting in an instantaneous function reliability estimation. As shown in Fig.4, a number of such function reliability calculators can be present in a reliability estimator.

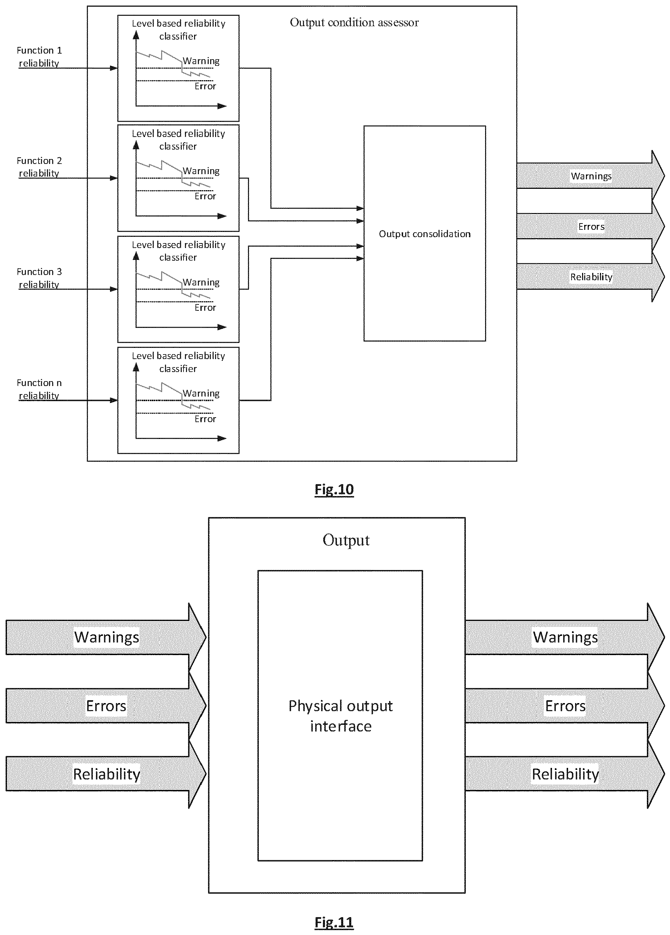

In order to assess if a certain function still operates correctly, the function reliabilities figures are evaluated in an output condition assessor (see Fig.10) against warning and error thresholds. The function reliability estimations are applied to a level based reliability classifier. This means that if the reliability estimation of a certain function drops below a certain warning threshold level, a warning alarm can be generated towards the output condition assessor output and as a consequence to the reliability estimator output or even the system component output. The warning level can be determined as a function of the estimated time before the error threshold level will be reached. This error level would be reached in case no diagnostic failure events are reported. This shows that the method allows scheduling sufficiently in advance preventive maintenance or specific test actions based on the warning levels determined on reliability functions. It can also enforce the execution of manual tests in order to have certain fault finding interval timers reset, avoiding that the error threshold levels are reached. In some cases this only occurs if certain manual actions are scheduled. If the reliability level of a certain function drops further below an error threshold level, specific output is generated, similar as for the warnings, resulting in application dependent error handling. Depending on the applied method for reliability allocation and the system requirements concerning reliability, availability, maintenance and safety warning and error, threshold levels can be calculated automatically providing a formal method to handle these requirements. This can be done to evaluate the minima in the methods used in the reliability allocator in combination with the applied method for the function reliability calculations and the applied safety levels and/or maintenance context. The conclusions of the assessments are next consolidated and combined in the output consolidation block and forwarded to the physical output interface (also corresponding to the block 'Output' in Fig.4) for further processing in the system.

The physical output interface in the reliability estimator allows combining the consolidated information into the system components output interfaces where relevant. This can be another system component comprising a reliability estimator, but may as well be a bell, a lamp, an input of a safety device, ... Fig.11 shows the physical output interface which converts the signals from the output condition assessor to the physical interfaces that are available on the system component.

By combining system components as shown in Fig.1 or 2, a complete system with all its functions can be individually characterized with respect to reliability. If the reliability of the functions exceeds a certain level, then everything is fine. If the level drops, there may be a need for maintenance, testing or disabling of the specific function without the other functions need to be disabled.

Conventional diagnostics tell exactly what is going wrong, but do not give any indication of which part of the system can still be used in a reliable way. There is further no indication if diagnostic testing was scheduled in time and how this correlates to the moment of testing of other system components or functional blocks. This could lead to unexpected issues related to dormant failures. These drawbacks are clearly overcome by the approach according to the present invention.

In order to make the described system flexible, a configuration infrastructure (see Fig.4) can be provided to allow defining the input selection, the reliability allocation (updating the reliability look-up tables or changing the reliability model), function reliability, output condition assessment and output configuration. Additionally, internal parameters like actual reliability figures and fault finding intervals can be stored in internal volatile or non-volatile memory to keep track of the system's reliability evolution over its lifetime, providing coverage to cope with power cycles. Specific parameter updates and read-outs can be supported by numerous solutions. The configuration infrastructure allows accessing the reliability estimator over a configuration interface, which is most optimally a data interface, to read and write the parameters mentioned above.

An advantage of the configuration infrastructure is that it allows changing, adding or removing reliability estimations for certain functions and their corresponding actions in relation to changes of the system, its components and its context. In some cases, a system can be dynamically changed (e.g. coupling of trains), meaning that the reliability functions need to be updated for this change. Also, there could be a need to change the component taking action in case a certain reliability estimate reaches a certain threshold level (e.g. changing the driver cab position in a train when the reversed traject is driven). In another case, e.g., when it concerns a software implementation of the proposed solution, the software program can be loaded to the system components of interest allowing upgrading an existing system with the solution according to the invention, as such introducing the benefits of this invention on systems after they have been deployed.

Also an internal diagnostics infrastructure can be part of the reliability estimator. This is illustrated in the above-mentioned Fig.4. The internal diagnostics monitor its internal processes, directly influencing the reliability estimates concerning the related internal functional blocks in case of a failure. The internal diagnostics infrastructure block continuously performs diagnostics on the different composing blocks of the reliability estimator. Its findings are exploited in a specific function reliability calculation, which is next made available for further use. The internal diagnostics infrastructure block is also capable of manipulating the individual function reliabilities or diagnostic block reliabilities to specific rules in order to have a measure for estimator failing as well.

The proposed approach can also be used to evaluate the instantaneous reliability of software components. By allocating a reliability measure to software blocks and using the catch for unexpected events and internal software diagnostics, the principle can be implemented entirely into the software itself leading to argued functional operation decisions as well. Any kind of hybrid platform can be envisaged for mixed hardware-software reliability estimators.

The invention offers a solution to various problems. First, the described method performs a real time analysis of functional reliability as well as of component reliability. In prior art solutions, this evaluation only occurs on a theoretical basis and only provides proof for function reliability in case the assumptions are met. This is often not the case since, in many systems, diagnostics are to be performed on manual triggers. If these triggers are not provided, the system is not tested, so causing a high dormant failure probability. The proposed approach gives clear insight in such situations and allows dealing appropriately with such cases. Additionally, the correlation of the timing of all relevant diagnostics is taken into account when assessing a functions reliability which is unseen in state of the art solutions. Also the abstraction level of the error reporting is very high in the described approach, which allows for very uniform interface definitions on hardware as well as on software level. Since the method scales from the smallest component to an entire system, it allows keeping the overview and unambiguously acts on failures, but keeps the un-impacted functions operational, thus maintaining a high reliability and availability of the system and its functions. This method also allows defining early warning based on the estimated time before an error level will be reached. This supports preventive maintenance or drives specific manual test programs.

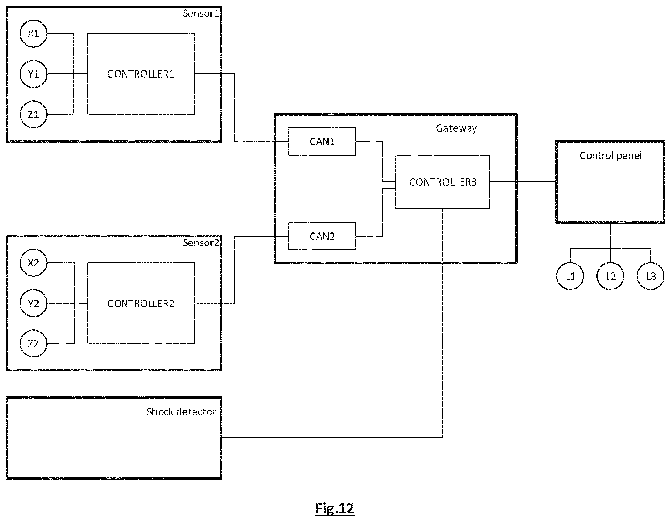

Fig.12 shows an example system topology in which two tri-axial accelerometer sensors and a shock detection device are connected to a gateway component. The gateway routes the data from the two sensor devices and the shock detector to a control panel where an assessment occurs on three functions. Proper operation of each of the functions is indicated by a corresponding control light. Based on the assessment the three connected lights are lit.

A first function being controlled relates to excessive vertical shock detection. This function is based on the measurement of the vertical acceleration Z in both sensors. If the vertical acceleration in both sensors exceeds a threshold level, L1 should be asserted. A lamp L1 is lit if the vertical shock is too high. The second function aims at instability detection and is based on the measurement of the horizontal accelerometers X and Y in both sensors. If the characteristics of at least one of the accelerometers in the horizontal plane show instability behaviour, L2 must be asserted. Instability can be detected from a specific resonance frequency with associated level. The third function is concerned with derailment detection based on measurement of the vertical accelerometers in both sensors and the opening of a contact in the shock detector. If at least one of the vertical accelerometers or the shock detector indicates high shock behaviour, L3 must be asserted. A characteristic feature of a derailment event is the exceedance of a specific threshold on the vertical acceleration level.

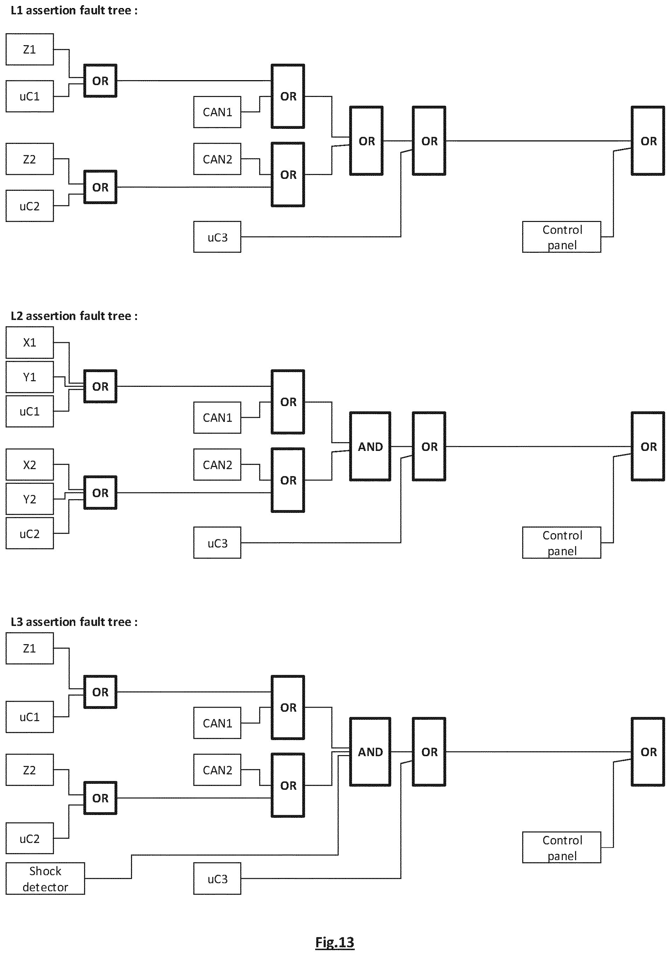

The assertion tree which determines the data path for the lighting of lights L1, L2 and L3, respectively, can readily be derived from Fig.12. The associated fault tree functions are illustrated in Fig.13. These functions will be used for interpreting graphs in other figures later in this description.

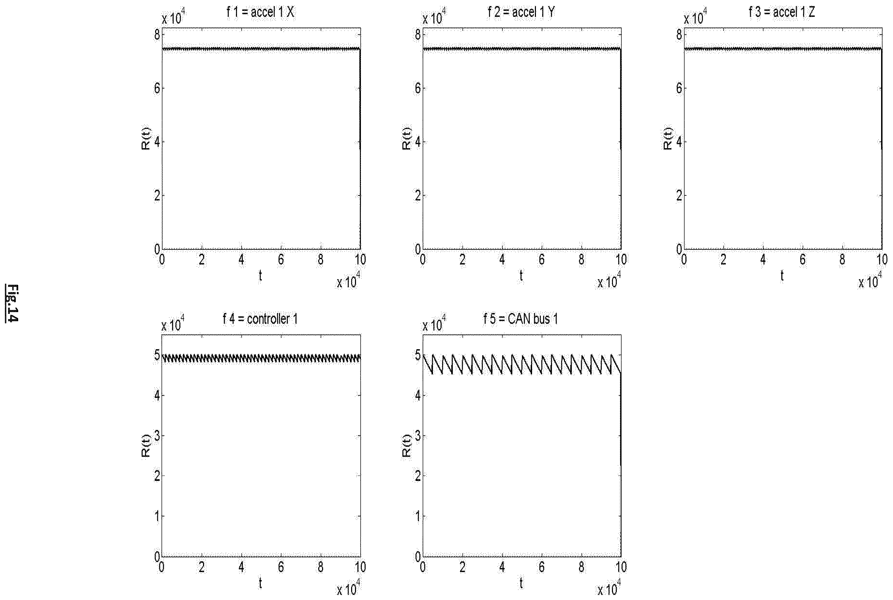

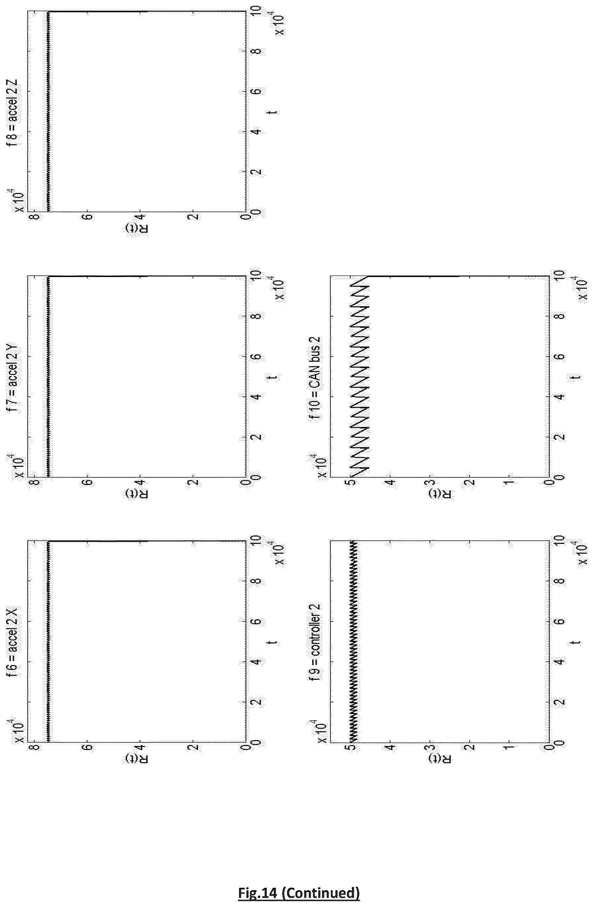

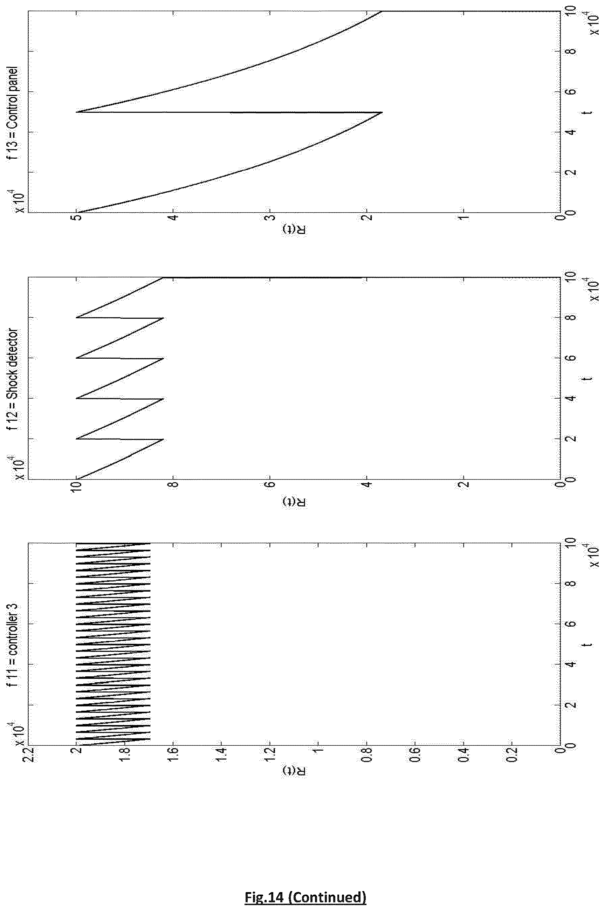

It is now illustrated how reliability figures evolve in the case of normal operation of the system shown in Fig.12. Fig.14 shows the reliability estimation evolution for the various system components of Fig.12, which are each individually covered by a specific diagnostic function. The individual graphs are to be interpreted as the output signals of a reliability allocator as defined in Fig.4. To ease interpreting the graphs the reliability functions are applied to an arbitrary estimated mean time to failure expressed in hours. Based on standard reliability calculation methods, it can be expected with a certain probability that, for each of the functional blocks in the system component, it will fail within a certain amount of time. Each time a diagnostic test is performed on a functional block, the corresponding reliability figure is reset to the initially expected mean time to failure, since it is known at that time whether the functional block is still operational or not, as can be seen in the graphs. Some functional blocks are tested less frequently than other leading to higher variation on their reliability figure. It is to be noted that all graphs are drawn in the assumption of 100% diagnostic coverage. One skilled in the art will recognise that the effect of non-full test coverage results in a residual reliability decrease after test execution.

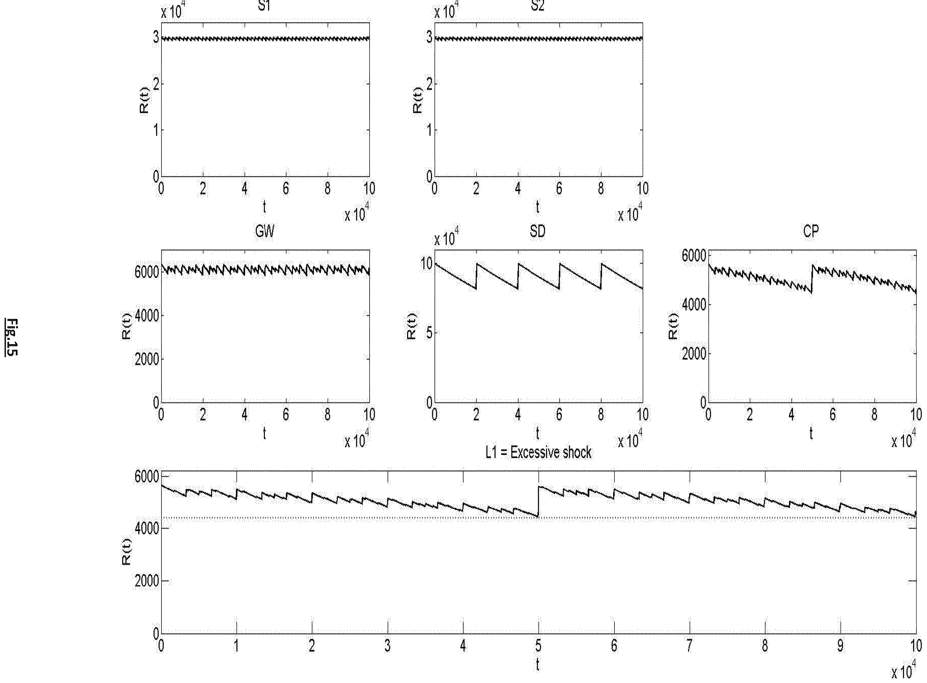

Fig.15 illustrates the total and intermediate reliability estimation for the excessive shock detection function through the system. The individual graphs (for Sensor 1 (S1), Sensor 2 (S2), gateway (GW), shock detector (SD), control panel (CP) and L1, respectively) can be construed as the reliability calculator output as defined in Fig.3. The dotted line in the bottom graph illustrates the theoretical lower threshold the system reliability can reach in normal operation. If the level of function reliability drops below this line, the function cannot be used anymore in a reliable way. The reason for this can be that the diagnostics are not performed anymore or that the diagnostics indicate that the function is not behaving in a correct way anymore. Similar figures can obviously be obtained for the other two functions discussed above (i.e. instability detection and derailment detection).

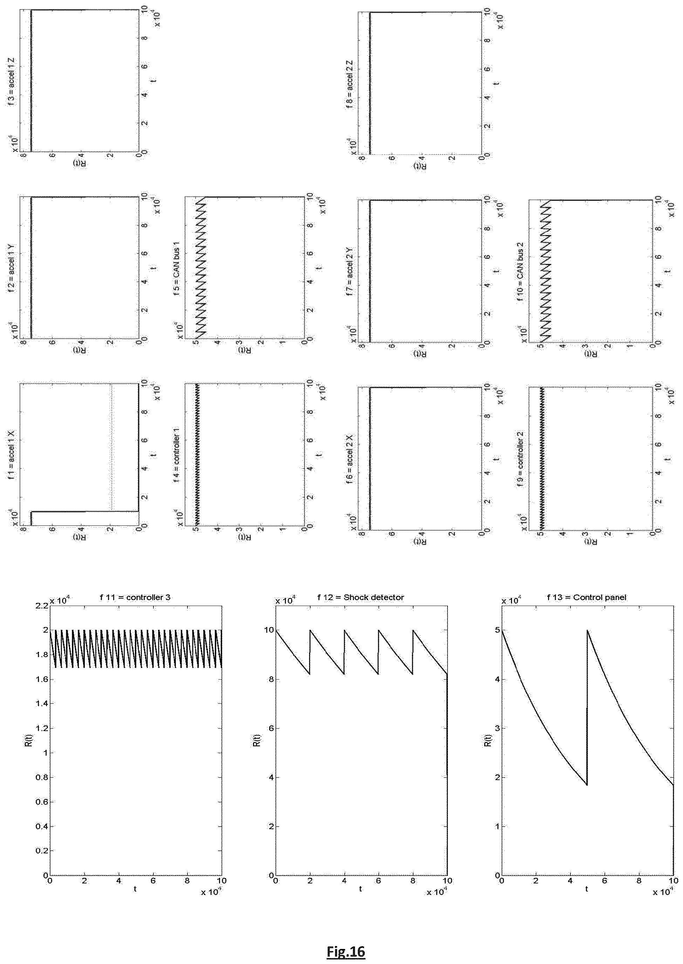

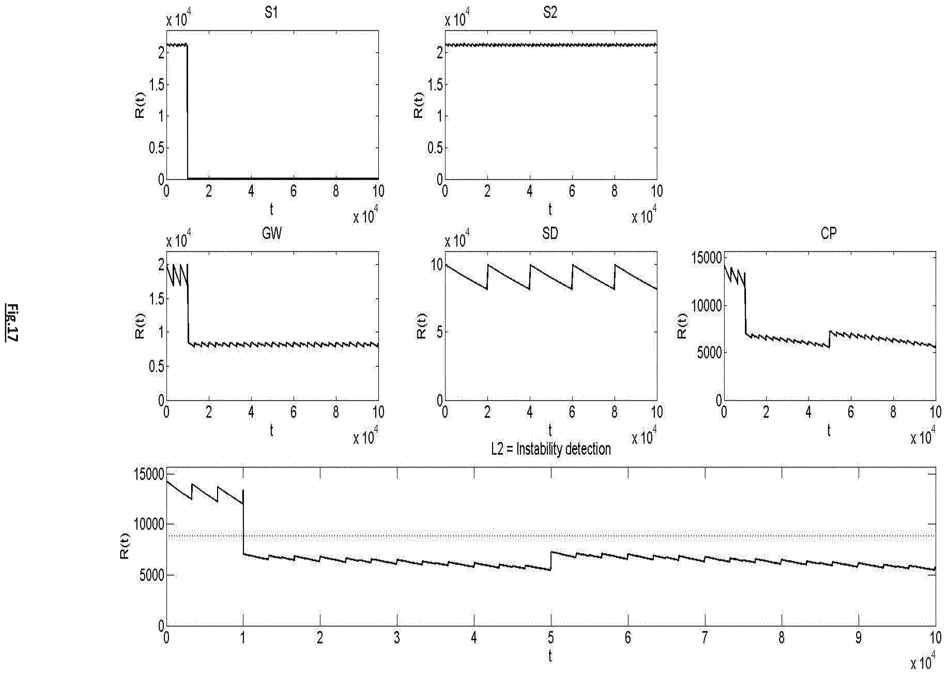

Now an example is addressed wherein accelerometer X1 in Sensor 1 fails. Fig.16 again shows in graphical form the reliability figure evolution in this case. The graph corresponding to X1 clearly shows a reliability figure drop at the end of the fault finding interval wherein the diagnostics detect the issue. As X1 is not involved when detecting excessive vertical shock (function L1) or derailment (function L3), the failure of X1 does not propagate for these two functions. Hence, similar reliability figure evolution curves can be obtained for both functions as in Fig.15. However, as can be seen from Fig.17, the X1 failure has a clear impact on the reliability function output of S1. Although S1 and S2 are used in a redundant scheme for this function, it can be observed that the total reliability of this function is heavily impacted.

In case the sensing element Z1 fails, the excessive shock detection function has no reliability anymore since it is sufficient that one of both vertical accelerometers fail to obtain this effect. The detection of instability, however, is not affected by the failure of Z1. The same holds for the derailment reliability, since there is triple redundancy on this function.

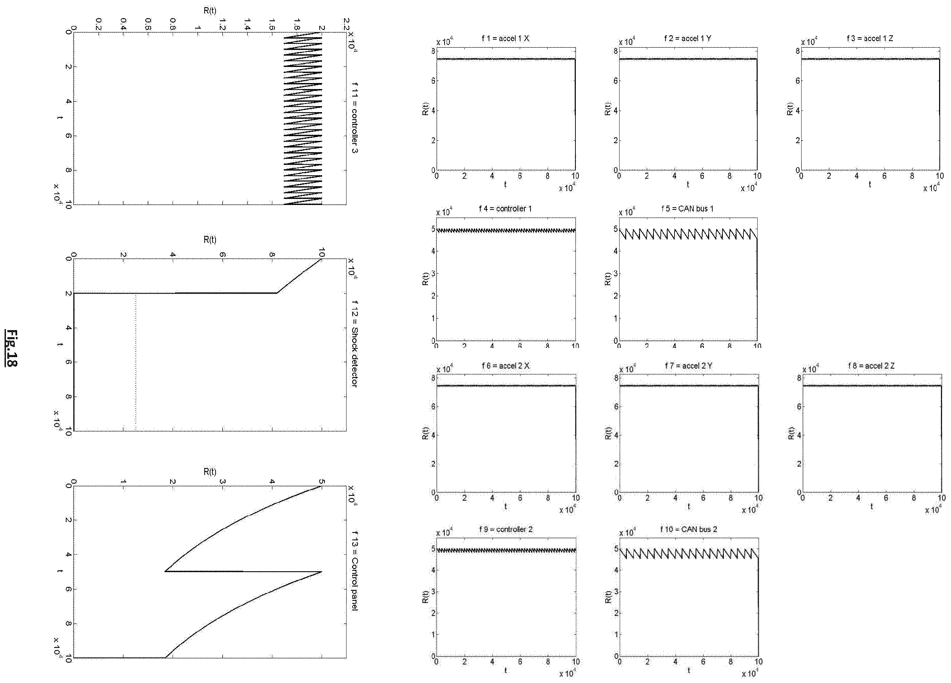

If the shock detector of the system in Fig.12 fails, the reliability figure evolution is as shown in Fig.18. Again the failing of the shock detector is clearly visible in the figure. Although the behaviour of the shock detector is relevant for the derailment function (L3), the failure has no impact, because of the triple redundancy on this function. As the shock detector does not play any role for the functions L1 and L2, they are not affected by the failure of the shock detector.

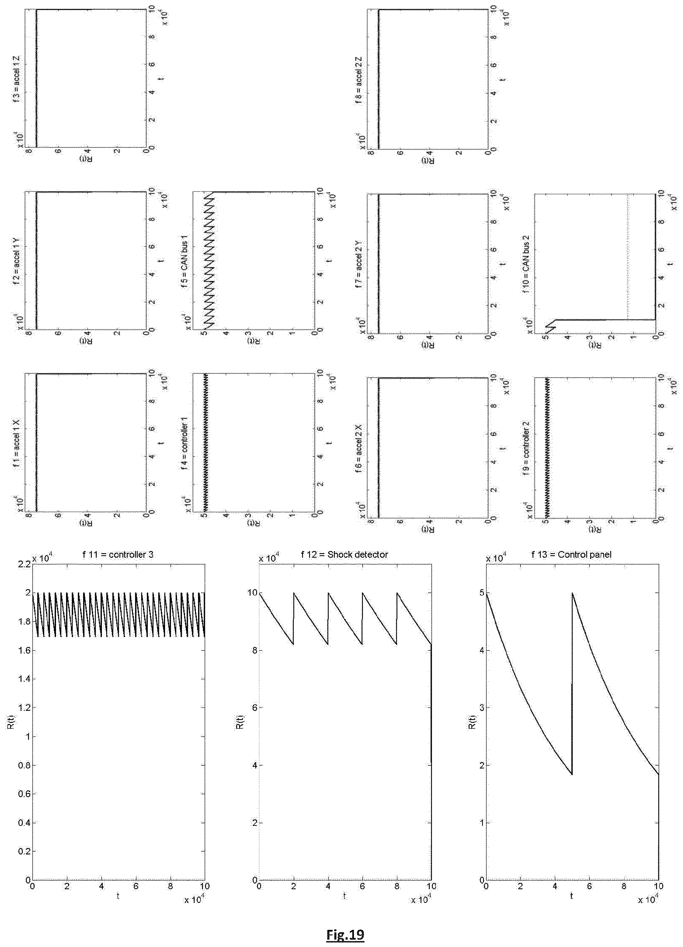

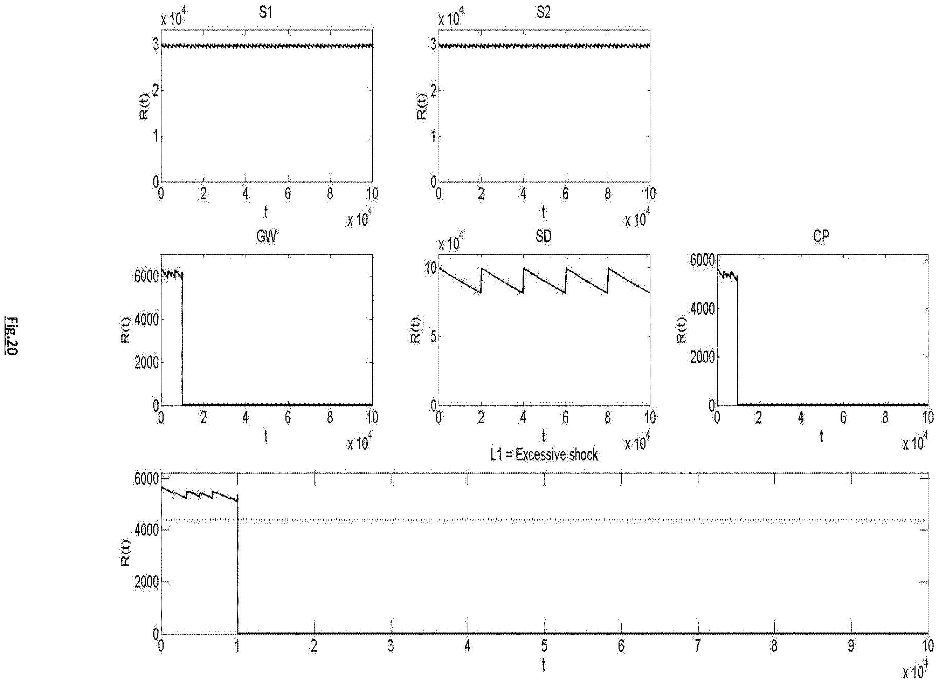

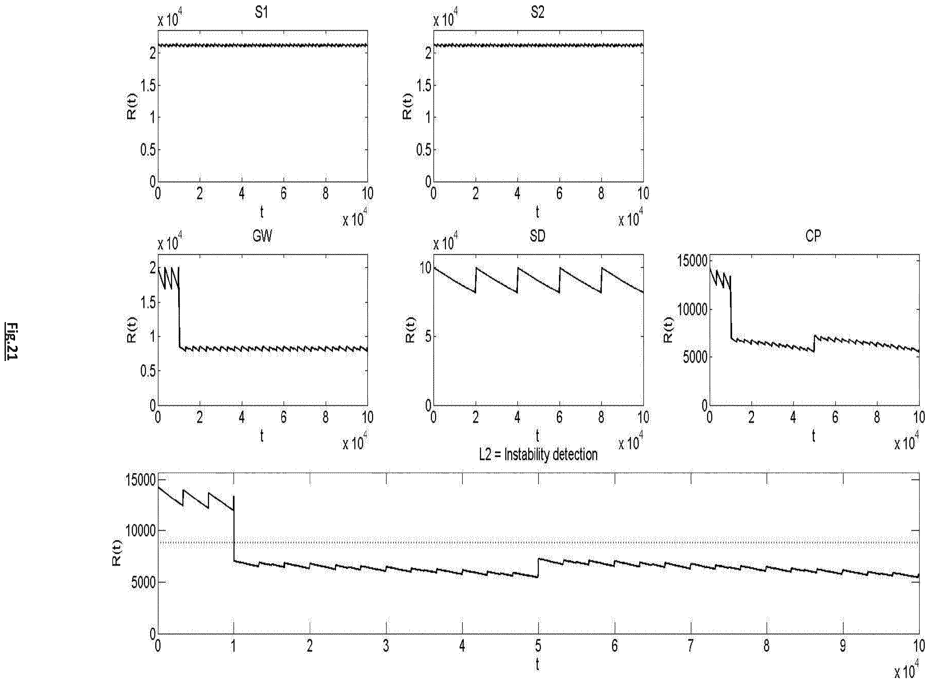

Fig.19 shows the reliability figure evolution in graphical form in case CAN bus 2 of the system from Fig.12 fails. Fig.20 shows the reliability level of the excessive shock detection function is completely lost. As illustrated by Fig.21, the reliability level of the instability detection function is reduced. There is no reliability impact for the derailment detection function.

In case controller 3 in the gateway in Fig.12 fails, it is clear that the reliability levels of all three functions are heavily affected.

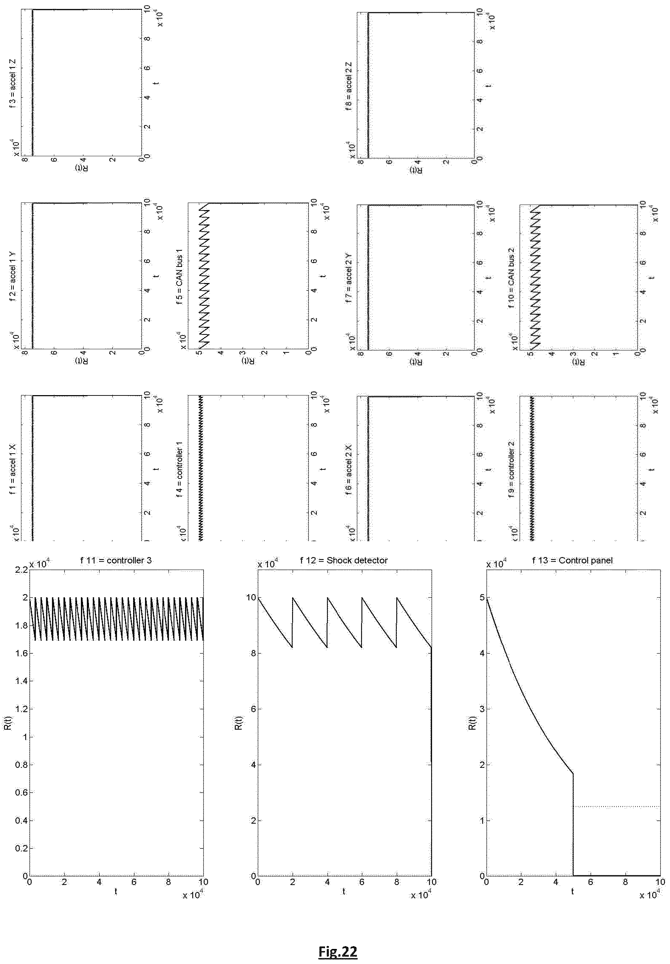

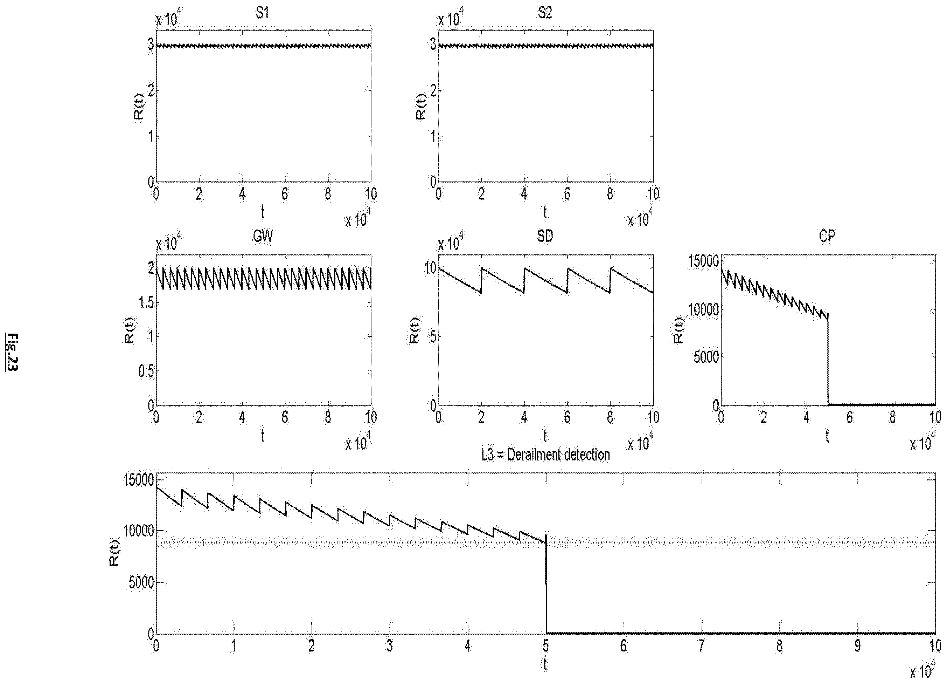

Fig.22 shows the reliability figure evolution in case the control panel of the system in Fig.12 fails. Not surprisingly, all three functions are affected by this issue. By way of example, Fig.23 illustrates the loss of reliability level for the derailment detection function. Remark that because of the high fault finding interval the detection of a failing control panel takes a long time.

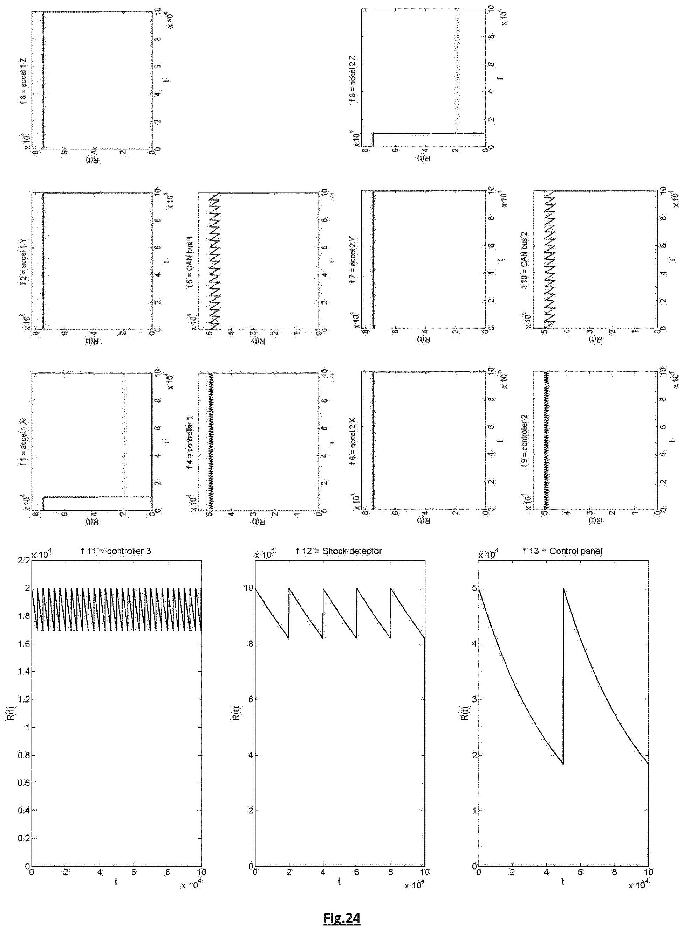

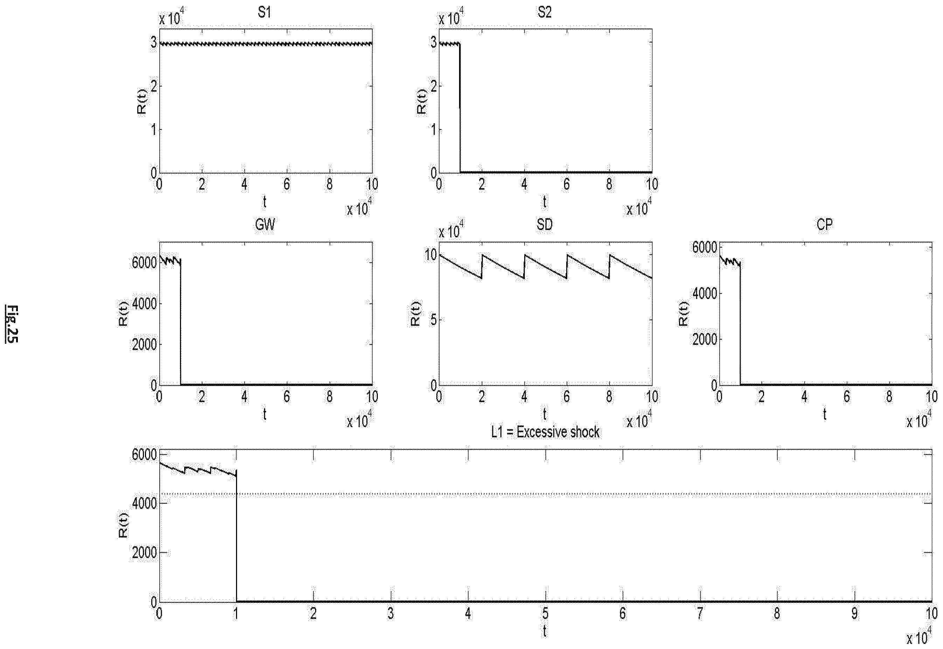

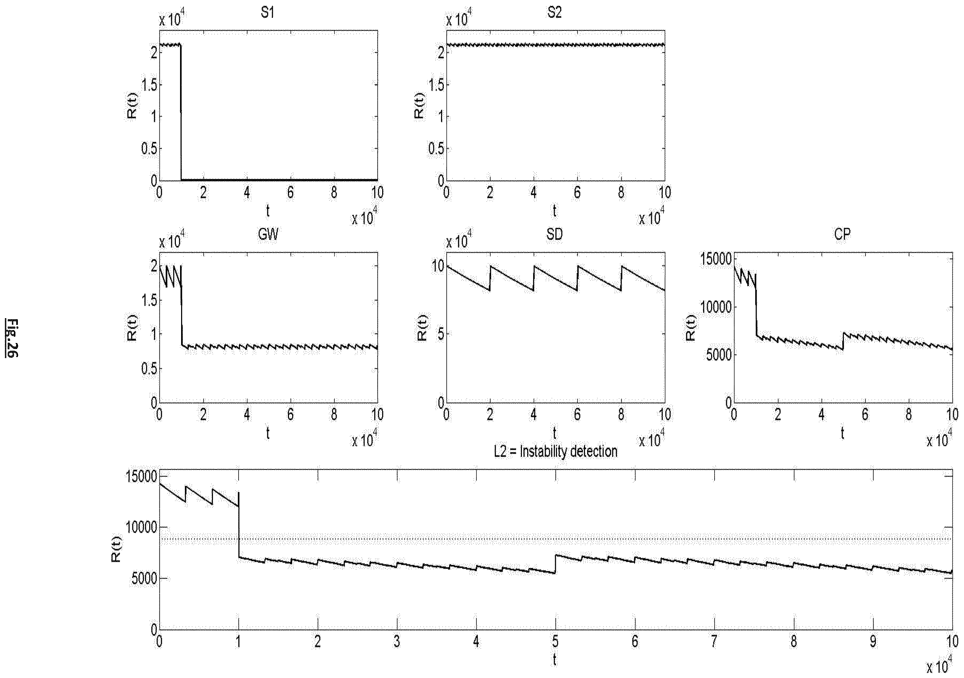

In a next example a case is considered wherein the sensing element X1 and Z2 of the system in Fig.12 fail. Fig.24 represents the corresponding reliability figure evolution. Fig.25 shows that the failure on X1 has no effect on the excessive shock functionality, but the failure of Z2 causes the function not to be reliable anymore. In Fig.26 the effect is reverse. Here the failure on X1 causes a high influence on the reliability of the instability detection function.

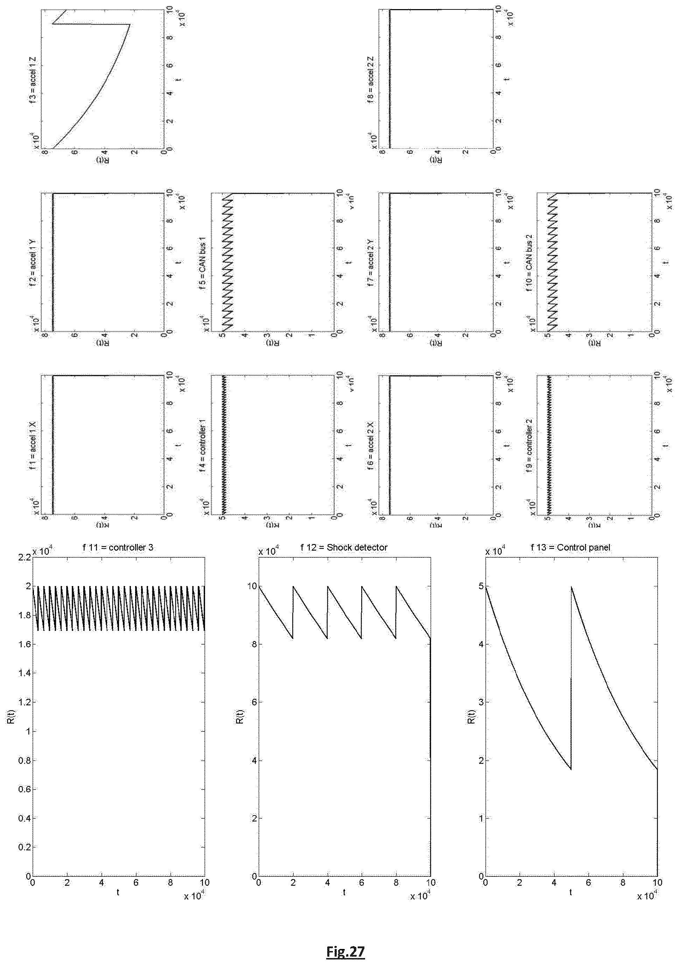

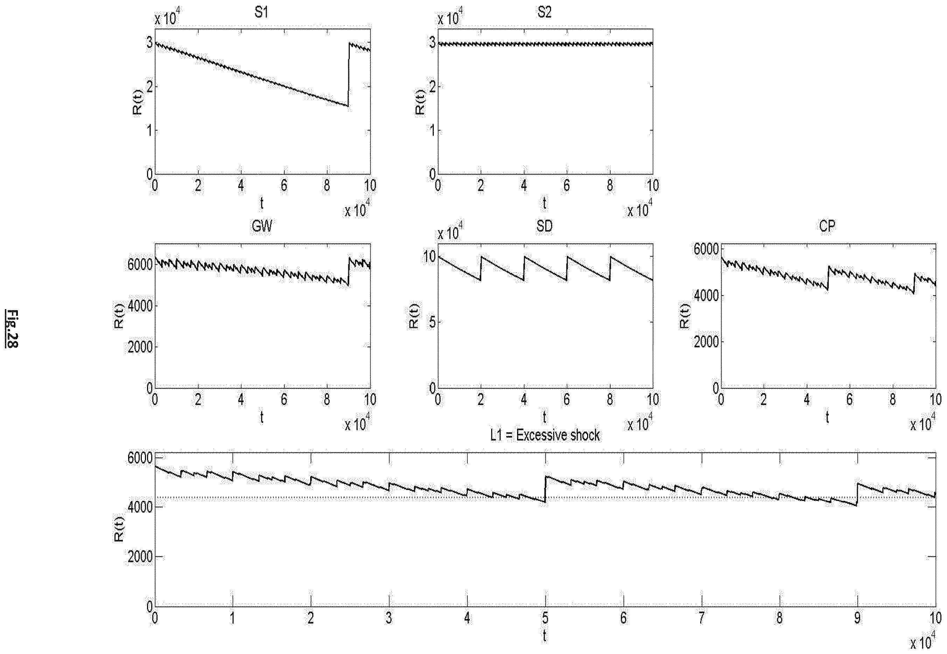

Now, a scenario is considered wherein the fault finding interval on sensing element Z1 of the system in Fig.12 is heavily increased. The reliability figure evolution is shown in Fig.27. Although there are no errors in the system, the excessive shock detection reliability still drops below the minimal threshold (see Fig.28). This illustrates that the system is capable of detecting the case that diagnostic tests (manual or automated) are not executed in time.

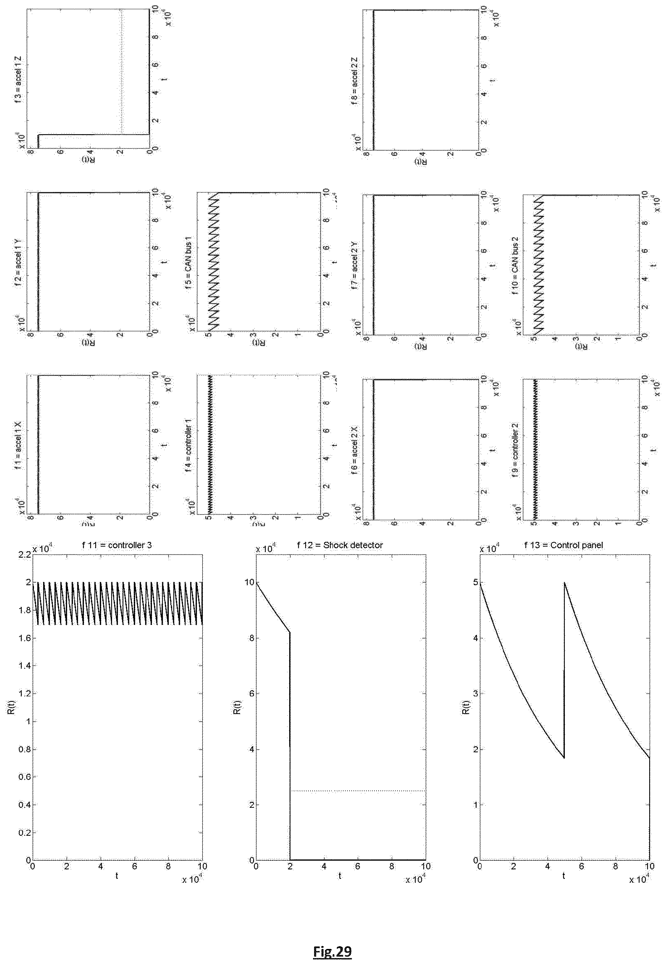

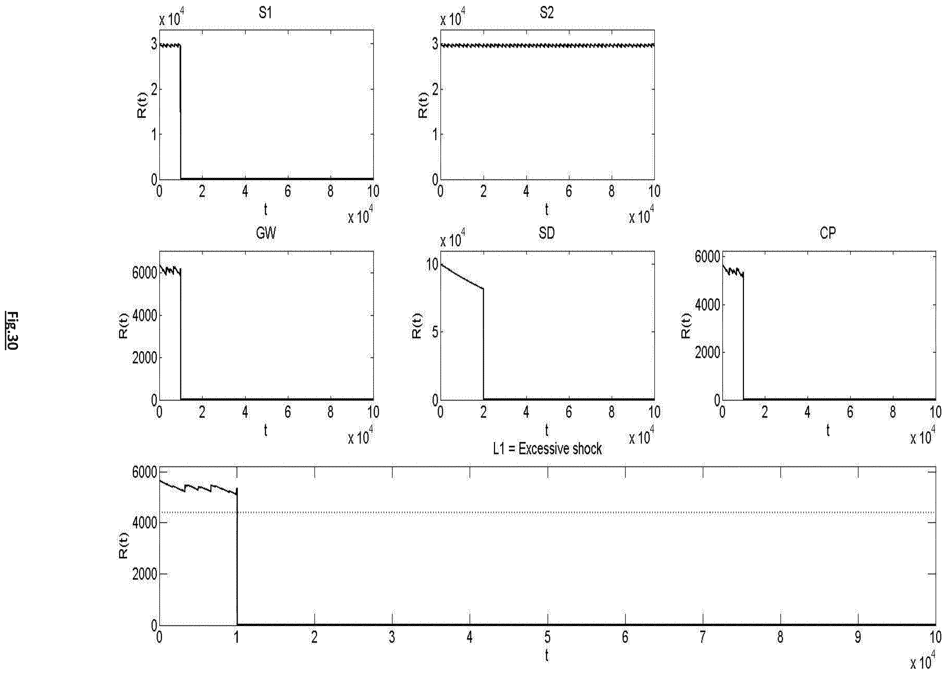

A next example concerns a case where the sensing element Z1 and the shock detector fail. The failing of the elements is clearly visible in Fig.29. The impact on the excessive shock function is a major drop in reliability as is shown in Fig.30. It is up to the definition of the diagnostics functionality to decide whether the drop is accessible or not. In this case, the function is still operating correctly but shows that parts of the subsystem are failing and could require maintenance.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways.

In the claims, the word "comprising" does not exclude other elements or steps, and the indefinite article "a" or "an" does not exclude a plurality. A single processor or other unit may fulfil the functions of several items recited in the claims. A computer program may be stored/distributed on a suitable medium, such as an optical storage medium or a solid-state medium supplied together with or as part of other hardware, but may also be distributed in other forms, such as via the Internet or other wired or wireless telecommunication systems.

## Claims

1. System comprising a plurality of system components (105, 120, 130, 140), wherein each system component of said plurality of system components (105, 120, 130, 140) comprises a device (106) for determining a reliability measure for a given function established by one or more functional blocks of said system component,
each of said system components comprising one or more functional blocks arranged for performing one or more functions,
wherein said device comprises:
- input means (200) for receiving, for each functional block involved in establishing said given function, one or more pieces of information, each piece representing a condition of the respective functional block of a system component to be assessed, said functional block being involved in establishing said given function,
- a module (201) arranged for classifying said conditions, for deriving diagnostic test interval information and for determining a functional block reliability estimation for each of said functional blocks based on said diagnostic test interval information and/or on said classified conditions,
- calculation means (202) adapted for determining a reliability measure for said given function established by said one or more functional blocks based on said one or more functional block reliability estimations and on reliability information propagated from other system components,
- decision means (203) for deriving a decision from said reliability measure of said given function,
- output means (204) for outputting said decision in a format adapted for a physical interface of said system component and for propagating said reliability measure to other system components (105, 120, 130, 140); and
wherein one or more system components of said plurality of system components (105, 120, 130, 140) is configured to act as a decision taking node for a first function and to just form part of the data stream path for a second function.

2. System as in claim 1, wherein said module comprises for classifying said conditions one or more first classifiers operative based on a threshold level.

3. System as in claim 1 or 2, wherein said module comprises an internal clock for performing timestamping.

4. System as in claim 1 or 2, wherein said module is arranged for receiving an external clock signal for performing timestamping.

5. System as in any of the previous claims, wherein said device is implemented with discrete hardware components.

6. System as in any of the previous claims, wherein said module is arranged for generating a timestamp based on a level transition, on a rising or falling edge, on specific protocol conventions or on the signal edges.

7. System as in any of the previous claims, wherein said device comprises an output condition assessor (203) arranged for evaluating said reliability measure.

8. System as in claim 7, wherein said output condition assessor comprises at least one second classifier for performing said evaluation.

9. System as in any of the previous claims, wherein said device comprises an internal diagnostics infrastructure (205) arranged for monitoring internal processes in said device.

10. System as in any of the previous claims, wherein said device comprises a configuration infrastructure block (206) for setting parameters of said input means and/or said module.

11. Method for determining a reliability measure for a given function established by one or more functional blocks of a system component (105, 120, 130, 140) to be assessed among a plurality of system components in a system, the method comprising in a device (106) comprised in said system component to be assessed:
- receiving, for each functional block involved in establishing said given function, one or more pieces of information each piece representing a condition of the respective functional block of said system component to be assessed, said functional block being involved in establishing said given function,
- classifying said conditions,
- deriving diagnostic test interval information,
- determining a functional block reliability estimation for each of said functional blocks based on said diagnostic test interval information and/or on said classified conditions,
- determining a reliability measure for said given function established by said one or more functional blocks based on said one or more functional block reliability estimations and on reliability information propagated from other system components,
- deriving a decision from said reliability measure,
- outputting said decision in a format adapted for a physical interface of said system component and propagating said reliability measures to other system components (105, 120, 130, 140);
wherein one or more system components of said plurality of system components (105, 120, 130, 140) is configured to act as a decision taking node for a first function and to just form part of the data stream path for a second function.

12. A program, executable on a programmable device containing instructions, which when executed, perform the method as in claim 11.

## Patentansprüche

1. System, umfassend eine Vielzahl von Systemkomponenten (105, 120, 130, 140), wobei jede Systemkomponente der genannten Vielzahl von Systemkomponenten (105, 120, 130, 140) eine Vorrichtung (106) zur Bestimmung eines Zuverlässigkeitsmaßes für eine gegebene Funktion umfasst, die durch einen oder mehrere funktionelle Blöcke der genannten Systemkomponente festgelegt wird, wobei jede der genannten Systemkomponenten einen oder mehrere funktionelle Blöcke umfasst, die eingerichtet sind, um eine oder mehrere Funktionen vorzunehmen, wobei die genannte Vorrichtung umfasst:
- Eingabemittel (200) zum Empfangen, für jeden funktionellen Block, der in die Festlegung der genannten gegebenen Funktion involviert ist, eines oder mehrerer Informationselemente, wobei jedes Element einen Zustand des jeweiligen funktionellen Blocks einer Systemkomponente repräsentiert, die zu bewerten ist, wobei der genannte funktionelle Block in die Festlegung der genannten gegebenen Funktion involviert ist,
- ein Modul (201), das eingerichtet ist, um die genannten Zustände zu klassifizieren, zum Ableiten diagnostischer Testintervallinformationen und zum Bestimmen einer funktionellen Blockzuverlässigkeitsschätzung für jeden der genannten funktionellen Blöcke auf der Basis der genannten diagnostischen Testintervallinformationen und/oder der genannten klassifizierten Zustände,
- Berechnungsmittel (202), die dafür geeignet sind, um ein Zuverlässigkeitsmaß für die genannte gegebene Funktion zu bestimmen, die von dem einen oder den mehreren funktionellen Blöcken festgelegt wird, auf der Basis der genannten einen oder mehreren funktionellen Blockzuverlässigkeitsschätzungen und von Zuverlässigkeitsinformationen, die von anderen Systemkomponenten verbreitet werden,
- Entscheidungsmittel (203) zum Ableiten einer Entscheidung von dem genannten Zuverlässigkeitsmaß der genannten gegebenen Funktion,
- Ausgabemittel (204) zum Ausgeben der genannten Entscheidung in einem Format, das für eine physische Schnittstelle der genannten Systemkomponente geeignet ist, und zum Verbreiten des genannten Zuverlässigkeitsmaßes zu anderen Systemkomponenten (105, 120, 130, 140); und wobei die eine oder die mehreren Systemkomponenten der genannten Vielzahl von Systemkomponenten (105, 120, 130, 140) dafür ausgelegt ist oder sind, um als Entscheidungstreffknoten für eine erste Funktion zu dienen und um nur einen Teil des Datenstromwegs für eine zweite Funktion zu bilden.

2. System nach Anspruch 1, wobei das genannte Modul zum Klassifizieren der genannten Zustände einen oder mehrere ersten Klassifikatoren umfasst, die auf der Basis eines Schwellenwerts operativ sind.

3. System nach Anspruch 1 oder 2, wobei das genannte Modul einen internen Takt zum Vornehmen einer Zeitstempelung umfasst.

4. System nach Anspruch 1 oder 2, wobei das genannte Modul eingerichtet ist, um ein externes Taktsignal zum Vornehmen der Zeitstempelung zu empfangen.

5. System nach einem der vorhergehenden Ansprüche, wobei die genannte Vorrichtung mit diskreten Hardware-Komponenten implementiert ist.

6. System nach einem der vorhergehenden Ansprüche, wobei das genannte Modul eingerichtet ist, um einen Zeitstempel auf der Basis eines Wertübergangs, einer Anstiegs- oder Abfallflanke, spezifischer Protokollkonventionen oder der Signalflanken zu generieren.

7. System nach einem der vorhergehenden Ansprüche, wobei die genannte Vorrichtung einen Ausgabezustandsbewerter (203) umfasst, der eingerichtet ist, um das genannte Zuverlässigkeitsmaß zu evaluieren.

8. System nach Anspruch 7, wobei der genannte Ausgabezustandsbewerter mindestens einen zweiten Klassifikator zum Vornehmen der genannten Evaluierung umfasst.

9. System nach einem der vorhergehenden Ansprüche, wobei die genannte Vorrichtung eine interne Diagnoseinfrastruktur (205) umfasst, die eingerichtet ist, um interne Prozesse in der genannten Vorrichtung zu überwachen.

10. System nach einem der vorhergehenden Ansprüche, wobei die genannte Vorrichtung einen Auslegungsinfrastrukturblock (206) zum Einstellen von Parametern der genannten Eingabemittel und/oder des genannten Moduls umfasst.

11. Verfahren zum Bestimmen eines Zuverlässigkeitsmaßes für eine gegebene Funktion, die von einem oder mehreren zu bewertenden funktionellen Blöcken einer Systemkomponente (105, 120, 130, 140) unter einer Vielzahl von Systemkomponenten in einem System festgelegt wird, wobei das Verfahren umfasst, in einer Vorrichtung (106), die in der genannten zu bewertenden Systemkomponente enthalten ist:
- Empfangen, für jeden funktionellen Block, der in die Festlegung der genannten gegebenen Funktion involviert ist, eines oder mehrerer Informationselemente, wobei jedes Element einen Zustand des jeweiligen funktionellen Blocks der genannten Systemkomponente repräsentiert, die zu bewerten ist, wobei der genannte funktionelle Block in die Festlegung der genannten gegebenen Funktion involviert ist,
- Klassifizieren der genannten Zustände,
- Ableiten diagnostischer Testintervallinformationen,
- Bestimmen einer funktionellen Blockzuverlässigkeitsschätzung für jeden der genannten funktionellen Blöcke auf der Basis der genannten diagnostischen Testintervallinformationen und/oder der genannten klassifizierten Zustände,
- Bestimmen eines Zuverlässigkeitsmaßes für die genannte gegebene Funktion, die von dem einen oder den mehreren funktionellen Blöcken festgelegt wird, auf der Basis der genannten einen oder mehreren funktionellen Blockzuverlässigkeitsschätzungen und von Zuverlässigkeitsinformationen, die von anderen Systemkomponenten verbreitet werden,
- Ableiten einer Entscheidung von dem genannten Zuverlässigkeitsmaß,
- Ausgeben der genannten Entscheidung in einem Format, das für eine physische Schnittstelle der genannten Systemkomponente geeignet ist, und Verbreiten des genannten Zuverlässigkeitsmaßes zu anderen Systemkomponenten (105, 120, 130, 140);
wobei die eine oder die mehreren Systemkomponenten der genannten Vielzahl von Systemkomponenten (105, 120, 130, 140) dafür ausgelegt ist oder sind, um als Entscheidungstreffknoten für eine erste Funktion zu dienen und um nur einen Teil des Datenstromwegs für eine zweite Funktion zu bilden.

12. Programm, welches auf einer programmierbaren Vorrichtung ausführbar ist, umfassend Instruktionen, die, wenn sie ausgeführt werden, das Verfahren nach Anspruch 11 vornehmen.

## Revendications

1. Système comprenant une pluralité de composants de système (105, 120, 130, 140), dans lequel chaque composant de système de ladite pluralité de composants de système (105, 120, 130, 140) comprend un dispositif (106) pour déterminer une mesure de fiabilité pour une fonction donnée établie par un ou plusieurs blocs fonctionnels dudit composant de système,
chacun desdits composants de système comprenant un ou plusieurs blocs fonctionnels agencés pour effectuer une ou plusieurs fonctions,
dans lequel ledit dispositif comprend :
- un moyen d'entrée (200) pour recevoir, pour chaque bloc fonctionnel impliqué dans l'établissement de ladite fonction donnée, un ou plusieurs morceaux d'information, chaque morceau représentant un état du bloc fonctionnel respectif d'un composant de système à évaluer, ledit bloc fonctionnel étant impliqué dans l'établissement de ladite fonction donnée,
- un module (201) agencé pour classer lesdits états, pour obtenir des informations d'intervalle de test de diagnostic et pour déterminer une évaluation de fiabilité de bloc fonctionnel pour chacun desdits blocs fonctionnels sur la base desdites informations d'intervalle de test de diagnostic et/ou desdits états classés,
- un moyen de calcul (202) conçu pour déterminer une mesure de fiabilité pour ladite fonction donnée établie par lesdits un ou plusieurs blocs fonctionnels sur la base desdites une ou plusieurs évaluations de fiabilité de bloc fonctionnel et d'informations de fiabilité propagées à partir d'autres composants de système,
- un moyen de décision (203) pour obtenir une décision à partir de ladite mesure de fiabilité de ladite fonction donnée,
- un moyen de sortie (204) pour sortir ladite décision dans un format conçu pour une interface physique dudit composant de système et pour propager ladite mesure de fiabilité à d'autres composants de système (105, 120, 130, 140) ; et
dans lequel un ou plusieurs composants de système de ladite pluralité de composants de système (105, 120, 130, 140) sont configurés pour agir comme un nœud de prise de décision pour une première fonction et pour juste former une partie du chemin de flot de données pour une seconde fonction.

2. Système selon la revendication 1, dans lequel ledit module comprend pour classer lesdits états un ou plusieurs premiers classificateurs opérationnels sur la base d'un niveau de seuil.

3. Système selon la revendication 1 ou 2, dans lequel ledit module comprend une horloge interne pour effectuer un horodatage.

4. Système selon la revendication 1 ou 2, dans lequel ledit module est agencé pour recevoir un signal d'horloge externe pour effectuer un horodatage.

5. Système selon l'une quelconque des revendications précédentes, dans lequel ledit dispositif est mis en œuvre avec des composants matériels discrets.

6. Système selon l'une quelconque des revendications précédentes, dans lequel ledit module est agencé pour produire un horodatage sur la base d'une transition de niveau, d'un flanc montant oudescendant, de conventions de protocole spécifique ou des bords de signal.

7. Système selon l'une quelconque des revendications précédentes, dans lequel ledit dispositif comprend un évaluateur d'état de sortie (203) agencé pour évaluer ladite mesure de fiabilité.

8. Système selon la revendication 7, dans lequel ledit évaluateur d'état de sortie comprend au moins un second classificateur pour effectuer ladite évaluation.

9. Système selon l'une quelconque des revendications précédentes, dans lequel ledit dispositif comprend une infrastructure de diagnostic interne (205) agencée pour contrôler des processus internes dans ledit dispositif.

10. Système selon l'une quelconque des revendications précédentes, dans lequel ledit dispositif comprend un bloc d'infrastructure de configuration (206) pour régler des paramètres dudit moyen d'entrée et/ou dudit module.

11. Procédé pour déterminer une mesure de fiabilité pour une fonction donnée établie par un ou plusieurs blocs fonctionnels d'un composant de système (105, 120, 130, 140) à évaluer parmi une pluralité de composants de système dans un système, le procédé comprenant dans un dispositif (106) compris dans ledit composant de système à évaluer :
- la réception, pour chaque bloc fonctionnel impliqué dans l'établissement de ladite fonction donnée, d'un ou plusieurs morceaux d'information, chaque morceau représentant un état du bloc fonctionnel respectif dudit composant de système à évaluer, ledit bloc fonctionnel étant impliqué dans l'établissement de ladite fonction donnée,
- le classement desdits états,
- l'obtention d'informations d'intervalle de test de diagnostic,
- la détermination d'une évaluation de fiabilité de bloc fonctionnel pour chacun desdits blocs fonctionnels sur la base desdites informations d'intervalle de test de diagnostic et/ou desdits états classés,
- la détermination d'une mesure de fiabilité pour ladite fonction donnée établie par lesdits un ou plusieurs blocs fonctionnels sur la base desdites une ou plusieurs évaluations de fiabilité de bloc fonctionnel et d'informations de fiabilité propagées en provenance d'autres composants de système,
- l'obtention d'une décision à partir de ladite mesure de fiabilité,
- la sortie de ladite décision dans un format conçu pour une interface physique dudit composant de système et la propagation desdites mesures de fiabilité à d'autres composants de système (105, 120, 130, 140) ;
dans lequel un ou plusieurs composants de système de ladite pluralité de composants de système (105, 120, 130, 140) sont configurés pour agir comme un nœud de prise de décision pour une première fonction et pour juste former une partie du chemin de flot de données pour une seconde fonction.

12. Programme, pouvant être exécuté sur un dispositif programmable contenant des instructions, qui lorsqu'elles sont exécutées, effectuent le procédé selon la revendication 11.
